# EUROPÄISCHE PATENTANMELDUNG

(11) **EP 3 909 683 A1**
(43) Veröffentlichungstag der Anmeldung: **17.11.2021**
(21) Anmeldenummer: 21162853.2
(22) Anmeldetag: 16.03.2021
(51) Int. Cl.: B02C 18/24, B02C 25/00, B02C 13/30, F16H 3/44

(54) **VERWENDUNG EINES ANTRIEBSSYSTEMS FÜR EINE ZERKLEINERUNGSVORRICHTUNG**

(30) Priorität: 17.03.2020 DE 102020001729; 24.03.2020 DE 102020001890; 03.04.2020 DE 102020002135
(71) Anmelder: LIG GmbH, 42551 Velbert (DE)
(72) Erfinder: DOPPSTADT, Ferdinand, 42555 Velbert (DE)
(74) Vertreter: Weidener, Jörg Michael

(57) **Zusammenfassung**

Die Erfindung betrifft die Verwendung eines Antriebssystems (1) für eine Zerkleinerungsvorrichtung (7) zur Zerkleinerung von Aufgabegut (8), vorzugsweise Hausmüll, Bioabfall, Sperrmüll, Baumischabfall, Holzmaterialien, insbesondere Altholz, Stammholz, Wurzelholz und/oder Grünschnitt, und/oder Gewerbemüll, insbesondere von zum Wickeln neigendem Gut, mit einem Hauptantrieb (2) zur Erzeugung einer Drehbewegung einer Walzenwelle (12) der Zerkleinerungsvorrichtung (7), einem mit dem Hauptantrieb (2) gekoppelten Überlagerungsgetriebe (3) und einer Steuereinrichtung (4) zum Detektieren eines Überlastfalls der Zerkleinerungsvorrichtung (7), wobei zum Antrieb des Überlagerungsgetriebes (3) ein mit der Steuereinrichtung (4) gekoppelter Elektromotor (5), vorzugsweise ein Synchronmotor, für einen Überlagerungszweig (6) des Überlagerungsgetriebes (3) vorgesehen ist, und wobei die Steuereinrichtung (4) derart ausgebildet ist, dass der Elektromotor (5) des Überlagerungszweiges (6) im Überlastfall dahingehend von der Steuereinrichtung (4) angesteuert wird, dass der Überlagerungszweig (6) des Überlagerungsgetriebes (3) eine Überlagerungsbewegung im Überlagerungsgetriebe (3) hervorruft, so dass die Antriebsdrehmomentbeaufschlagung von dem Hauptantrieb (2) zu der Walzenwelle (12) unterbunden wird.

## Beschreibung

Die Erfindung betrifft die Verwendung eines Antriebssystems für eine Zerkleinerungsvorrichtung zur Zerkleinerung von Aufgabegut, vorzugsweise Hausmüll, Bioabfall, Sperrmüll, Baumischabfall, Holzmaterialien, insbesondere Altholz, Stammholz, Wurzelholz und/oder Grünschnitt und/oder Gewerbemüll, insbesondere von zum Wickeln neigendem Gut. Die Zerkleinerungsvorrichtung ist ebenfalls zur Verarbeitung oder zur Zerkleinerung von zähem Material, wie Teppichen (Rollenware), Schaumstoffmatratzen, PU-Schaumstoffverkleidungen, insbesondere aus der Automobilindustrie, Gummireifen, etc., ausgebildet. Zum Wickeln neigendes Gut kann längsstabiles Material sein, wie Folienbahnen, Astwerk mit langen Zweigen oder dergleichen.

Des Weiteren betrifft die vorliegende Erfindung eine Zerkleinerungsvorrichtung vorgesehen zur Zerkleinerung von Aufgabegut, vorzugsweise Hausmüll, Bioabfall, Sperrmüll, Baumischabfall, Holzmaterialien, insbesondere Altholz, Stammholz, Wurzelholz und/oder Grünschnitt und/oder Gewerbemüll, mit wenigstens einer Walzenwelle und einer an der Walzenwelle angeordneten Zerkleinerungswalze mit daran befestigten Zerkleinerungswerkzeugen. Die Walzenwelle kann durch ein Antriebssystem der vorgenannten Art angetrieben werden.

Zum Antrieb der Walzenwelle und somit zum Antrieb der an der Walzenwelle, vorzugsweise drehfest, angeordneten Zerkleinerungswalze ist in der Praxis ein Hauptantrieb des Antriebssystems vorgesehen, der eine Drehbewegung der Walzenwelle bewirkt. Bei einer Drehung der Zerkleinerungswalze wirken die an der Zerkleinerungswalze angeordneten Zerkleinerungswerkzeuge mit am Gehäuse und/oder an Gegenwerkzeugträgern angeordneten Schneidwerkzeugen und/oder Gegenzerkleinerungswerkzeugen zusammen. Das Zusammenwirken ist derart ausgebildet, dass, wenn das Aufgabegut in den Spalt zwischen den Zerkleinerungswerkzeugen und den Gegenzerkleinerungswerkzeugen gelangt, das Aufgabegut durch die Drehung der Zerkleinerungswalze zerkleinert wird.

Bei zum Wickeln neigendem Gut tritt in der Praxis die Problematik auf, dass dieses Aufgabegut nicht mehr in dem bzw. durch Führung durch den Spalt zwischen den Zerkleinerungswerkzeugen und den Gegenzerkleinerungswerkzeugen zerkleinert werden kann, sondern diesen Spalt letztlich "zusetzt" und somit die Zerkleinerungswalze - bis hin zu einem Stillstand - blockieren kann.

Im Stand der Technik ist es bekannt, um derartigen Störungen entgegenzuwirken, ein Getriebe zwischen Hauptantrieb und der Walzenwelle anzuordnen, so dass die Drehzahl der Zerkleinerungswalze angepasst werden kann. Derartige zwischengeschaltete Getriebe lassen sich jedoch nur in vorgebbaren bzw. bestimmten Schaltstufen regeln, so dass auch eine Kupplung benötigt wird, um Störungen bzw. einen hohen Verschleiß am Schaltgetriebe zu verhindern.

Doch selbst bei einer Regelung der Drehzahl der Zerkleinerungswalze kann es bei großformatigen, aber auch bei zum Wickeln neigendem Aufgabegut vorkommen, dass die Belastung der Zerkleinerungsvorrichtung so hoch wird, dass der Hauptantrieb die Zerkleinerungswalze nicht mehr drehen kann und somit hohe Drehmomente am Hauptantrieb anliegen. Dieses Verhalten bedingt, dass die Walzenwelle trotz Antrieb durch den Hauptantrieb stillstehen kann, was eine Beschädigung der gesamten Zerkleinerungsvorrichtung und insbesondere des Hauptantriebs zur Folge haben kann.

Um einem solchen Überlastfall entgegenzuwirken, ist es im Stand der Technik erforderlich, durch entsprechende Kupplungen sicherzustellen, dass die Zerkleinerungswalze vom Hauptantrieb entkoppelt wird. Anschließend muss Bedienpersonal händisch das die Klemmung bzw. den Stillstand der Zerkleinerungswalze verursachende Aufgabegut entfernen. Hierfür muss sich das Bedienpersonal regelmäßig in eine Zwangshaltung begeben.

Zusätzlich wird der gesamte Betriebsablauf durch den Stillstand der Zerkleinerungsvorrichtung gestört. Dies bewirkt hohe Betriebs- und Wartungskosten und beeinträchtigt, insbesondere bei Anordnung der Zerkleinerungsvorrichtung in einer Verfahrenskette mit weiteren Vorrichtungen, den Gesamtprozess.

Aufgabe der vorliegenden Erfindung ist es, die vorgenannten Nachteile des Standes der Technik zu vermeiden oder aber zumindest im Wesentlichen zu reduzieren.

Die vorgenannte Aufgabe wird erfindungsgemäß durch die Verwendung eines Antriebssystems für eine Zerkleinerungsvorrichtung zur Zerkleinerung von Aufgabegut gemäß Anspruch 1 gelöst.

Die Walzenwelle kann dabei, vorzugsweise drehfest, mit einer Zerkleinerungswalze der Zerkleinerungsvorrichtung verbunden sein.

Mit dem Hauptantrieb ist erfindungsgemäß ein Überlagerungsgetriebe des Antriebssystems gekoppelt, insbesondere wobei das Überlagerungsgetriebe zur, vorzugsweise stufenlosen, Drehzahlveränderung der Walzenwelle ausgebildet ist. Das Antriebssystem umfasst ferner eine Steuereinrichtung zum Detektieren eines Überlastfalls der Zerkleinerungsvorrichtung. Die Steuereinrichtung kann zudem vorzugsweise derart ausgebildet sein, dass sie eine kontinuierliche Überwachung der Betriebssituation der Zerkleinerungsvorrichtung ermöglicht.

Ein Überlastfall ist insbesondere dann gegeben, wenn die Walzenwelle droht festzustehen bzw. wenn sich die Drehzahl der Walzenwelle droht derart zu verringern, dass ein Stillstand der Zerkleinerungswalze absehbar ist. Ein solcher Überlastfall tritt insbesondere dann ein, wenn sich Aufgabegut in der Zerkleinerungsvorrichtung verklemmt und/oder aufgewickelt hat und somit - zumindest mittelbar - die Drehbewegung der Walzenwelle blockiert wird.

Erfindungsgemäß ist zum Antrieb des Überlagerungsgetriebes ein mit der Steuereinrichtung gekoppelter Elektromotor für einen Überlagerungszweig des Überlagerungsgetriebes vorgesehen. Die Steuereinrichtung ist derart ausgebildet, dass der Elektromotor des Überlagerungszweiges im Überlastfall dahingehend von der Steuereinrichtung angesteuert wird, dass der Überlagerungszweig des Überlagerungsgetriebes eine Überlagerungsbewegung im Überlagerungsgetriebe hervorruft, so dass die Antriebsdrehmomentbeaufschlagung und/oder die Antriebsleistungsbeaufschlagung von dem Hauptantrieb zur Walzenwelle unterbunden oder zumindest im Wesentlichen reduziert wird. Demzufolge wird insbesondere der Drehmomentfluss zu "Null" kompensiert.

Das Antriebssystem weist insbesondere einen Antriebsstrang auf, der sich wenigstens aus dem Hauptantrieb, dem an dem Hauptantrieb angeordneten Überlagerungsgetriebe und aus der an dem Überlagerungsgetriebe angeordneten Walzenwelle zusammensetzt.

Die Betriebssituation der Zerkleinerungsvorrichtung lässt sich insbesondere in drei wesentliche Fälle gliedern, nämlich in die Regelbetriebssituation, die Lastsituation und dem Überlastfall. In der Regelbetriebssituation wird die Walzenwelle von dem Hauptantrieb angetrieben und die Zerkleinerungsvorrichtung zerkleinert das Aufgabegut. In der Lastsituation ist weiterhin eine Zerkleinerung des Aufgabegutes vorgesehen, wobei die auf die Zerkleinerungswalze einwirkenden Kräfte dazu führen, dass die Drehzahl der Zerkleinerungswalze bzw. der Walzenwelle gegenüber der Drehzahl in der Regelbetriebssituation reduziert ist bzw. wird und/oder dass am Hauptantrieb ein höheres Drehmoment anliegt.

Schließlich lässt sich der Überlastfall insbesondere dahingehend von der Lastsituation und der Regelbetriebssituation abgrenzen, dass im Überlastfall die Walzenwelle droht festzustehen bzw. sich Aufgabegut in der Zerkleinerungsvorrichtung verkeilt bzw. verklemmt hat. Ohne das erfindungsgemäße Eingreifen im Überlastfall würde die Walzenwelle feststehen bzw. sich nicht mehr drehen, da die Antriebsdrehmomentübertragung bzw. Drehmomentbeaufschlagung von dem Hauptantrieb zu der Walzenwelle weiterhin besteht und der Hauptantrieb überlastet ist. Dies führt letztlich zu möglicherweise zu hohen Drehmomenten am Hauptantrieb und kann einen Maschinenschaden zur Folge haben.

Insbesondere kann der Elektromotor als Zusatzantriebsaggregat angesehen werden, der es letztlich ermöglicht, das Zusammenwirken zwischen Hauptantrieb und Walzenwelle im Überlastfall so zu unterbinden, dass die Leistung des Hauptantriebes letztlich "kompensiert" oder auch umgelenkt werden kann.

Erfindungsgemäß wird insbesondere eine völlig neue Flexibilität beim Zerkleinern ermöglicht. Insbesondere kann durch das Überlagerungsgetriebe das Drehmoment, die Drehzahl und/oder die Leistung von dem Hauptantrieb zumindest im Wesentlichen stufenlos und variabel auf die Zerkleinerungswalze übertragen werden. Die Variabilität wird durch den Überlagerungszweig ermöglicht. Letztlich kann eine beispielsweise stufenlose Drehzahlanpassung ermöglicht werden, insbesondere wobei das jeweilige Verhalten an materialspezifisches Aufgabegut angepasst werden kann. Besonders vorteilhaft ist, dass keine unerwünschte Belastung am Hauptantrieb im Überlastfalls entsteht, da durch das Überlagerungsgetriebe, insbesondere bei einem Stillstand der Walzenwelle, ein Ausgleich bzw. eine Kompensation für den Hauptantrieb sichergestellt werden kann.

Demzufolge kann erfindungsgemäß durch die Steuereinrichtung eine Überwachung der Betriebssituation der Zerkleinerungswalze ermöglicht werden, so dass im Überlastfall der Hauptantrieb nicht durch zu große an ihm anliegende Drehmomente belastet wird. Insbesondere kann so ein "Abwürgen" des Hauptantriebes vermieden werden, das heißt das Unterschreiten einer Mindest-Drehzahl bzw. der erzwungene Stillstand des Hauptantriebs. Dies schont nicht nur den Hauptantrieb, sondern kann auch sicherstellen, dass sich der Antriebsstrang an die Betriebssituation der Zerkleinerungsvorrichtung optimal anpassen kann. Folglich kann eine Beschädigung der Zerkleinerungsvorrichtung im Überlastfall vermieden werden. Demnach kann gegenüber dem Stand der Technik die Langlebigkeit der Zerkleinerungsvorrichtung erhöht und die Wartungs- und Betriebskosten der Zerkleinerungsvorrichtung können reduziert werden. Auch kann die Zerkleinerungsvorrichtung mit geringeren Ausfallzeiten eingesetzt werden, da insbesondere durch die Unterbrechung bzw. Reduktion der Antriebsdrehmomentübertragung bzw. -beaufschlagung von dem Hauptantrieb zu der Walzenwelle ermöglicht wird, dass die Zerkleinerungsvorrichtung sich selbst aus der Blockade befreit. Insbesondere ist kein Eingreifen einer außenstehenden Bedienperson erforderlich. Auch kann es im Überlastfall vermieden werden, dass der Hauptantrieb abgeschaltet werden muss, so dass auch ein späteres, typischerweise aufwendiges erneutes Anlaufen des Hauptantriebes nicht mehr erforderlich ist.

Das erfindungsgemäße Antriebssystem ermöglicht folglich, dass hohe ungewollte Belastungen bzw. Überlastungen innerhalb des gesamten Antriebssystems vermieden werden können.

Der eingesetzte Elektromotor zeichnet sich dadurch aus, dass er insbesondere im Vergleich zu einem Hydraulik- oder Verbrennungsmotor mit elektrischer Energie betrieben werden kann. So kann zum Antrieb des Elektromotors elektrische Energie aus erneuerbaren Energiequellen eingesetzt werden, so dass der Elektromotor umweltfreundlich bzw. ressourcenschonend betrieben werden kann.

Es versteht sich, dass die Steuereinrichtung zur Überwachung der Betriebssituation und/oder zum Detektieren eines Überlastfalls der Zerkleinerungsvorrichtung bzw. eines drohenden Überlastfalls eine Mehrzahl an Messeinrichtungen, die in der Zerkleinerungsvorrichtung angeordnet sind, nutzen kann. So kann eine Mehrzahl von elektrischen Sensoren eingesetzt werden, die Betriebsdaten der Zerkleinerungsvorrichtung, wie die momentane Leistung, das momentane Drehmoment, die Drehzahl der Walzenwelle, des Elektromotors, des Hauptantriebes und/oder die Temperatur an verschiedenen Stellen der Zerkleinerungsvorrichtung, erfassen können. Insbesondere müssen nicht unbedingt zusätzliche physikalische Transmitter, wie Drucksensoren, Positionsmelder für Schwenkwinkel oder ähnliches, unbedingt erforderlich, so dass die Betriebskosten und die Herstellungskosten der mit der Steuereinrichtung und den dazugehörigen Messeinrichtungen ausgestatteten Zerkleinerungsvorrichtung reduziert werden können. Allerdings versteht es sich, dass die vorgenannten Mittel durchaus auch eingesetzt werden können.

In der Steuereinrichtung kann ferner auch das zu verarbeitende Aufgabegut zur Steuerung und zur Detektion des Überlastfalls berücksichtigt werden. So kann in Abhängigkeit von dem zu verarbeitenden Aufgabegut die Betriebssituation der Zerkleinerungsvorrichtung überwacht werden und der Überlastfall in Abhängigkeit von dem zu verarbeitenden Aufgabegut in der Steuereinrichtung abgebildet bzw. bestimmbar sein. Der optimale Zeitpunkt zur Unterbindung der Antriebsdrehmomentbeaufschlagung von dem Hauptantrieb zu der Walzenwelle kann somit von der Steuereinrichtung bestimmt werden, insbesondere in Abhängigkeit von dem zu verarbeitenden Aufgabegut und der daraus resultierenden, angenommenen Regelbetriebssituation. Ein Abgleich zwischen der Regelbetriebssituation und der derzeit vorhandenen bzw. detektierten Betriebssituation der Zerkleinerungsvorrichtung kann in der Steuereinrichtung zum Detektieren bzw. Feststellen eines Überlastfalls genutzt werden. Hierzu kann die Steuereinrichtung entsprechende Stellmittel aufweisen, über die Einstellungen manuell möglich sind.

Insbesondere versteht es sich, dass unter der Detektion eines Überlastfalls auch zu verstehen ist, dass ein drohender Überlastfall erkannt wird. Eine solche Vorgabe wird erfindungsgemäß auch als Detektion des Überlastfalls verstanden.

Der eingesetzte Elektromotor für den Überlagerungszweig zeichnet sich ferner dadurch aus, dass ein insbesondere großer Drehzahl-Arbeitsbereich vorhanden ist, der vorteilhaft zur Vorgabe der Überlagerungsbewegung in dem Überlagerungsgetriebe genutzt werden kann, die letztlich dazu führt, dass die Antriebsdrehmomentbeaufschlagung von dem Hauptantrieb zu der Walzenwelle im von der Steuereinrichtung festgestellten Überlastfall unterbunden oder reduziert wird. So kann sich der Elektromotor auch an Hauptantriebe anpassen, die mit unterschiedlichen Leistungen oder Drehzahlen betrieben werden. So kann der Hauptantrieb mit unterschiedlichen Drehzahlen und/oder Leistungen eingesetzt werden, insbesondere in Abhängigkeit von dem zu verarbeitenden Stoffstrom bzw. Aufgabematerial. Der Elektromotor kann sich aufgrund seiner hohen Variabilität an unterschiedliche Betriebssituationen des Hauptantriebes anpassen. Dies ermöglicht es, dass durch den höheren Drehzahlbereich des elektrischen Überlagerungsantriebes bzw. des elektrischen Überlagerungszweiges von der gesamten Maschinenkonfiguration eine deutlich höhere Einsatzflexibilität bereitgestellt werden kann.

Bei einer besonders bevorzugten Ausführungsform der vorliegenden Erfindung ist vorgesehen, dass die Kopplung und/oder das Zusammenwirken zwischen der Steuereinrichtung und dem Elektromotor des Überlagerungszweiges derart ausgebildet ist, dass die Steuereinrichtung im Überlastfalls den Elektromotor des Überlagerungszweiges dahingehend ansteuert, dass die Drehrichtung der Walzenwelle für eine Reversierbewegung umgekehrt wird. Eine Umkehr der Drehrichtung der Walzenwelle ist derart zu verstehen, dass durch den Hauptantrieb im Regelbetrieb eine erste Drehrichtung der Walzenwelle vorgegeben wird. Im Überlastfall kann durch die im Überlagerungsgetriebe aufgegebene Überlagerungsbewegung des Überlagerungszweiges diese erste Drehrichtung umgekehrt werden, so dass die Walzenwelle letztlich gegenläufig zu der Regelbetriebssituation laufen kann.

Es versteht sich, dass diese Reversierbewegung lediglich für einen begrenzten Bereich vorgegeben werden kann. Die Reversierbewegung ermöglicht, dass die Zerkleinerungsvorrichtung die Blockade bzw. die Klemmung selbst lösen kann, da der Spalt zwischen den Zerkleinerungswerkzeugen und den Gegenzerkleinerungswerkzeugen vergrößert werden kann. So kann sich das geklemmte Gut wieder lösen, so dass Maschinenschäden oder dergleichen aufgrund der Klemmung vermieden werden können. Damit kann sich die Zerkleinerungsvorrichtung selbst wieder aus einer, insbesondere drohenden, Klemmung befreien. Eine drohende Klemmung ist derart zu verstehen, dass die Steuereinrichtung durch die Detektion des drohenden Überlastfalls oder des Überlastfalls eine sich abzeichnende Blockade erkennen und den Regelbetrieb der Zerkleinerungsvorrichtung durch die vorgegebene Überlagerungsbewegung im Überlagerungsgetriebe durch den Überlagerungszweig stoppen kann.

Besonders vorteilhaft ist, dass diese Umkehrbewegung bzw. Reversierbewegung der Walzenwelle ohne Umschaltung oder Abschaltung des Hauptantriebes erfolgen kann. Die Reversierbewegung wird letztlich durch das Überlagerungsgetriebe ermöglicht.

Um die Verstopfung bzw. Klemmung zu lösen, ist es somit erfindungsgemäß insbesondere nicht mehr erforderlich, den Hauptantrieb abzuschalten. Ferner kann - jedenfalls in den meisten Fällen - auch vermieden werden, dass eine Bedienperson manuell bzw. händisch das eingeklemmte Aufgabegut aus der Klemmung lösen muss. Dadurch kann auch die Arbeitssicherheit erhöht werden. Auch lässt sich eine solche Klemmung durch die bevorzugte Ausgestaltung der Erfindung vergleichsweise schnell lösen, so dass auch die Ausfallzeiten der Zerkleinerungsvorrichtung durch vermiedene Abschaltungen der Zerkleinerungsvorrichtung und/oder des Hauptantriebs drastisch reduziert werden können.

Darüber hinaus ist bei einer weiteren bevorzugten Ausführungsform vorgesehen, dass die Steuereinrichtung derart ausgebildet ist, dass der Elektromotor des Überlagerungszweiges weiter dahingehend von der Steuereinrichtung angesteuert wird, dass die Drehzahl und/oder die Leistung des Hauptantriebes während des Betriebes der Zerkleinerungsvorrichtung und insbesondere im Überlastfall zumindest im Wesentlichen konstant bleibt und/oder in einem Toleranzbereich mit Abweichungen von maximal 10 % liegt. Der Toleranzbereich kann derart ausgewählt sein, dass die Abweichungen um den Regelbetriebskennwert der Drehzahl und/oder Leistung des Hauptantriebes im Regelbetrieb schwanken. Letztlich kann durch die Überlagerungsbewegung im Überlagerungsgetriebe ermöglicht werden, dass der Haupantrieb mit zumindest im Wesentlichen konstanter Drehzahl und/oder Leistung betrieben wird, wobei die Antriebsdrehmomentbeaufschlagung und/oder die Antriebsleistungsbeaufschlagung von dem Hauptantrieb zu der Walzenwelle zumindest im Überlagerungsfall unterbunden oder zumindest im Wesentlichen unterbunden wird. Insbesondere ist kein Abschalten des Hauptantriebes im Überlagerungsfall, insbesondere für eine Reversierbewegung der Walzenwelle, erforderlich.

Vorzugsweise wird der Hauptantrieb bzw. die Steuerung des Hauptantriebes nicht oder kaum von der Betriebssituation der Zerkleinerungsvorrichtung und insbesondere vom Überlastfall der Zerkleinerungsvorrichtung beeinflusst. Durch einen derartigen Betrieb des Hauptantriebes kann insbesondere im Überlastfall ein "Abwürgen" vermieden werden. Ein Abwürgen des Hauptantriebes würde jedenfalls dann auftreten, wenn die Drehzahl des Hauptantriebes soweit reduziert wird, dass der Hauptantrieb abgeschaltet wird. Durch den Betrieb mit zumindest im Wesentlichen konstanter Drehzahl des Hauptantriebes kann ein derartiges Verhalten des Hauptantriebes vermieden werden.

Vorzugsweise beträgt die Drehzahl des Hauptantriebes zwischen 1000 bis 3000 U/min, bevorzugt zwischen 1300 bis 2000 U/min, insbesondere zwischen 1500 bis 1800 U/min. In Abhängigkeit von dem Übersetzungsverhältnis zwischen Hauptantrieb und Walzenwelle ergibt sich bei einer Antriebsdrehmomentübertragung von dem Hauptantrieb zu der Walzenwelle die Drehzahl der Walzenwelle. Demzufolge ist die Drehzahl des Hauptantriebes in Abhängigkeit von der zu erreichenden Drehzahl der Walzenwelle und in Abhängigkeit von der Übersetzung des Überlagerungsgetriebes gewählt. Erfindungsgemäß ist festgestellt worden, dass mit Drehzahlen in der vorgenannten Größenordnung das Ergebnis des Zerkleinerungsvorgangs optimiert werden kann. Vorzugsweise ist die Steuereinrichtung zur Überwachung des Drehmomentes, der Leistung und/oder der Drehzahl des Elektromotors des Überlagerungszweiges ausgebildet. Letztlich kann durch die Überwachung des Drehmomentes, der Leistung und/oder der Drehzahl des Elektromotors von der Steuereinrichtung festgestellt werden, ob der Überlastfall eintritt. Alternativ oder zusätzlich kann auch vorgesehen sein, dass die Steuereinrichtung zur Überwachung des Drehmomentes, der Leistung und/oder der Drehzahl des Hauptantriebes ausgebildet ist. So kann vorgesehen sein, dass bei einem zu hohen Anstieg des Drehmomentes und/oder der Leistung und/oder bei einem zu starken Absinken der Drehzahl des Hauptantriebes - was letztlich von dem Verhalten im Regelbetrieb abweicht - von der Steuereinrichtung der Überlastfall detektiert wird. Letztlich würde das Drehmoment und/oder die Leistung des Hauptantriebes jedenfalls dann ansteigen, wenn die Zerkleinerungsvorrichtung verklemmt ist bzw. droht zu verklemmen. Ebenso sinkt in dem vorgenannten Fall die Drehzahl am Hauptantrieb beispielsweise sogar bis hin zum Stillstand. Durch den zunehmenden Drehmomentbedarf des Hauptantriebes und/oder die fallende Drehzahl kann somit eine sich abzeichnende Blockade bzw. Klemmung in der Zerkleinerungsvorrichtung erkannt werden.

Alternativ oder zusätzlich kann die Steuereinrichtung auch zur Überwachung der Drehzahl der Walzenwelle ausgebildet sein. Die Drehzahl der Walzenwelle würde sich jedenfalls dann reduzieren, wenn eine drohende Klemmung bzw. Blockade in der Zerkleinerungsvorrichtung auftritt bzw. festgestellt wird. Wie zuvor erläutert, kann der Steuereinrichtung in diesem Zusammenhang wenigstens eine oder eine Mehrzahl von Messeinrichtung(en) zugeordnet sein, die das Drehmoment, die Drehzahl und/oder die Leistung des Hauptantriebes und/oder des Elektromotors und/oder das Drehmoment und/oder die Drehzahl und/oder die Leistung der Zerkleinerungswalze und/oder der Walzenwelle überwacht/überwachen. Letztlich ermöglicht eine derartige Überwachung, dass die Steuereinrichtung den Überlastfall bzw. einen drohenden Überlastfall detektieren und somit durch die erfindungsgemäße Ansteuerung des Elektromotors die Überlagerungsbewegung im Überlagerungsgetriebe hervorrufen kann.

Ferner ist vorzugsweise das Überlagerungsgetriebe ein Planeten-Überlagerungsgetriebe. Ein Planeten-Überlagerungsgetriebe ermöglicht die Überlagerungsbewegung im Überlastfall durch den Überlagerungszweig. Der Überlagerungszweig kann dem Überlagerungsgetriebe zugeordnet sein bzw. an dem Überlagerungsgetriebe angreifen, wobei die Überlagerung mit dem Überlagerungszweig durch das Überlagerungsgetriebe als solches ermöglicht werden kann. Das Planeten-Überlagerungsgetriebe kann auch als Umlaufrädergetriebe bezeichnet werden. Das Planeten-Überlagerungsgetriebe ermöglicht eine kompakt bauende Getriebeform des Überlagerungsgetriebes und letztlich ein Drei-Wellen-Getriebe. Dabei kann eine Welle dem Antrieb, eine weitere Welle dem Abtrieb (Zerkleinerungswalze bzw. Walzenwelle) und eine dritte Welle, die mit dem Überlagerungszweig verbunden ist, zugeordnet sein.

Das Planeten-Überlagerungsgetriebe kann ein Sonnenrad, wenigstens ein mit dem Sonnenrad zusammenwirkendes Planetenrad und ein mit dem wenigstens einem Planetenrad zusammenwirkendes Hohlrad aufweisen. Insbesondere ist eine Mehrzahl von Planetenrädern vorgesehen, die miteinander über einen Planetenradträger - auch Planetenradsteg genannt - verbunden sind.

Bevorzugt ist die Walzenwelle an dem Planetenradträger angeordnet. Alternativ oder zusätzlich kann auch vorgesehen sein, dass die Walzenwelle an wenigstens einem Planetenrad angeordnet ist.

Der Hauptantrieb kann mit dem Sonnenrad verbunden sein bzw. angreifend an dem Sonnenrad angeordnet sein und das Sonnenrad antreiben. So kann vorgesehen sein, dass eine zumindest im Wesentlichen konstante bzw. dauerhafte Drehung (das heißt eine Drehung mit zumindest im Wesentlichen konstanter Drehzahl) des Sonnenrades während des Betriebes der Zerkleinerungsvorrichtung vorliegt. Im Regelbetrieb überträgt bevorzugt das Sonnenrad die Drehbewegung auf die Planetenräder und somit auf den Planetenradträger, was wiederum zu einer Drehung der Walzenwelle führen kann. Dabei wird das Hohlrad bevorzugt mit dem Überlagerungszweig und/oder dem Elektromotor gekoppelt angeordnet und im Regelbetrieb drehfest belassen. Im Überlastfall wird diese Antriebsdrehmomentbeaufschlagung von dem Sonnenrad zu dem Planetenrad und/oder zu dem Planetenradträger durch die Überlagerungsbewegung zumindest im Wesentlichen reduziert oder unterbunden.

Vorzugsweise ist vorgesehen, dass der Elektromotor des Überlagerungszweiges mit dem Hohlrad, insbesondere unmittelbar, verbunden ist. Das Hohlrad, an dem der als Zusatzantriebsaggregat ausgebildete Elektromotor verbindend angeordnet ist, kann dabei Teil des Überlagerungszweiges des Überlagerungsgetriebes sein. Die Überlagerungsbewegung des Überlagerungszweiges kann somit durch eine Drehung des Hohlrades hervorgerufen werden. Im Überlastfall kann insbesondere die Drehung des Hohlrades die Antriebsdrehmomentbeaufschlagung von dem Sonnenrad zu dem wenigstens einen Planetenrad und/oder zu dem Planetenradträger durch die Überlagerungsbewegung unterbunden oder zumindest im Wesentlichen reduzieren. So kann der Drehmomentfluss zu "Null" kompensiert werden. Für eine Reversierbewegung kann vorgesehen sein, dass sich das Hohlrad mit einer derart hohen Drehzahl dreht, dass die Drehrichtung der Walzenwelle umgekehrt wird - insbesondere durch die durch das Hohlrad erreichte Überlagerungsbewegung im Überlagerungsgetriebe.

Besonders bevorzugt ist vorgesehen, dass im Regelbetrieb - das heißt nicht im Überlastfall - das Hohlrad feststehend ausgebildet ist bzw. festgehalten (das heißt gebremst) wird. Somit kann insbesondere das Hohlrad im Regelbetrieb im Überlagerungsgetriebe keine Überlagerungsbewegung hervorrufen, so dass eine zumindest näherungsweise ausschließliche Drehmomentbeaufschlagung bzw. Drehmomentübertragung von dem Sonnenrad (das durch den Hauptantrieb angetrieben wird) zu dem Planetenradträger (an dem die Walzenwelle angeordnet ist) zum Antrieb der Walzenwelle erfolgt.

Bei einer weiteren ganz besonders bevorzugten Ausführungsform der vorliegenden Erfindung ist der Elektromotor des Überlagerungszweiges als Bremse mit veränderbarer Bremswirkung ausgebildet. Insbesondere ist der Elektromotor zum Festhalten des Hohlrades während des Regelbetriebes der Zerkleinerungsvorrichtung ausgebildet. Demzufolge kann durch den Elektromotor bzw. durch den an dem Hohlrad angeordneten Überlagerungszweig der Stillstand des Hohlrades während des Regelbetriebes der Zerkleinerungsvorrichtung ermöglicht werden. Insbesondere ist vorgesehen, dass der Elektromotor demzufolge auch während des Regelbetriebes betrieben wird, insbesondere nicht nur im Überlastfall angeschaltet wird. Somit kann ein zumindest im Wesentlichen konstanter Betrieb des Elektromotors während des Betriebes der Zerkleinerungsvorrichtung vorgesehen sein.

Vorzugsweise ist die Ausbildung des Elektromotors des Überlagerungszweiges als Bremse derart vorgesehen, dass die Funktion einer mechanischen Haltebremse für den Stillstand des Hohlrades vorliegt. Insbesondere verlängert die Bremse die Drehachse des Überlagerungs-Motors, das heißt des Elektromotors.

In diesem Zusammenhang kann weiter bevorzugt vorgesehen sein, dass auch ein weiteres Bremsmittel zumindest im Wesentlichen unmittelbar mit dem Elektromotor verbunden ist, das die Ausbildung des Elektromotors als "Bremse mit veränderbarer Bremswirkung" ermöglicht. Dabei kann dieses Bremsmittel als mechanische Haltebremse ausgebildet sein. Insbesondere ist das weitere Bremsmittel keine Reibbremse. Die mechanische Haltebremse bzw. das Bremsmittel kann eine Drehzahlanpassung des Hohlrades herbeiführen, insbesondere durch die veränderbare Bremswirkung. Das weitere Bremsmittel kann, insbesondere bezogen auf ein Lüftelement der Bremse, ohne externe Energiezufuhr und/oder energielos und/oder stromlos schließbar sein, insbesondere durch Federdruck. Ganz besonders bevorzugt ist dies für einen Notfallbetrieb - das heißt bei Ausfall der Regelung bzw. der Steuereinrichtung - oder im Überlastfall. Das Lüftelement kann weiter bevorzugt elektrisch betrieben werden.

Bei einer weiteren besonders bevorzugten Ausgestaltung des Erfindungsgedankens ist die Steuereinrichtung derart ausgebildet, dass der Elektromotor im Überlastfall dahingehend angesteuert wird, dass er derart mit dem Hohlrad zusammenwirkt, dass eine Bewegung des Hohlrades, insbesondere durch eine Verringerung der Bremswirkung des Elektromotors auf das Hohlrad, ermöglicht wird und/oder dass die Drehzahl des Hohlrades erhöht wird, so dass die Umkehr der Drehrichtung der Walzenwelle für die Reversierbewegung bewirkt wird. Ganz besonders bevorzugt kann weiter vorgesehen sein, dass der Elektromotor mit dem Bremsmittel und/oder dem Überlagerungszweig derart zusammenwirkt, dass die Bremswirkung im Überlastfall auf das Hohlrad verringert wird, so dass eine Überlagerungsbewegung - hervorgerufen durch Drehung des Hohlrades - ermöglicht werden kann. Für eine Umkehr der Drehrichtung der Walzenwelle - im Verhältnis zu der Drehrichtung im Regelbetrieb - kann vorgesehen sein, dass die Drehzahl des Hohlrades, insbesondere durch die verringerte Bremswirkung, derart erhöht wird, dass diese Umkehr erfolgt. Demzufolge kann durch den Elektromotor der Stillstand und eine ermöglichte Bewegung des Hohlrades gesteuert werden, was letztlich eine Überlagerungsbewegung im Überlagerungsgetriebe hervorrufen kann, die zumindest im Wesentlichen Unterbindung der Antriebsdrehmomentbeaufschlagung von dem Sonnenrad auf den Planetenradträger dienen kann.

Vorteilhaft an dem Elektromotor ist, dass sich dieser schnell an unterschiedliche Betriebssituationen anpassen kann und insbesondere stufenlos regelbar ist. Durch den Elektromotor und/oder durch die Regelbarkeit der Bremsfunktion des Elektromotors kann eine schnelle sowie flexible Reaktion auf die jeweilige Betriebssituation der Zerkleinerungsvorrichtung ermöglicht werden. Insbesondere kann zeitnah auf Drehzahlveränderungen und/oder Drehmomenterhöhungen an der Walzenwelle reagiert werden, die durch den Betrieb der Zerkleinerungsvorrichtung entstehen können.

Somit ist die Regelung durch die Steuereinrichtung über das Zusammenwirken zwischen dem als Bremse wirkenden Elektromotor, dem Hauptantrieb und der Walzenwelle ein Prozess, der insbesondere auf den Überlastfall reagieren kann bzw. zur Vermeidung eines solchen ausgelegt ist. Besonders bevorzugt ist die Steuereinrichtung derart ausgebildet, dass die, insbesondere kinematische, Drehzahlvorgabe für den Überlagerungszweig zumindest im Wesentlichen kontinuierlich während des Betriebs der Zerkleinerungsvorrichtung erfolgt.

Diese Vorgabe für die Drehzahl für den Überlagerungseingang, beispielsweise für die einzuhaltende Drehzahl des Hohlrades (auch eine Drehzahl von 0 U/min kann vorgegeben werden - das heißt ein Stillstand des Hohlrades, der insbesondere während des Regelbetriebes vorgegeben wird) führt dann, zumindest lastabhängig vom Hauptprozess, zu entsprechenden Gegen- und/oder Bremsmomenten am Überlagerungseingang. Die hierfür notwendige Bremsenergie, die am Überlagerungseingang lastbedingt bereitgestellt werden kann, kann mit dem Ziel der Energierückgewinnung wieder zurückgewonnen, insbesondere wieder eingespeist, werden. Dies ermöglicht insbesondere, dass ein energieeffizienter Betrieb der Zerkleinerungsvorrichtung gewährleistet werden kann.

Darüber hinaus kann alternativ oder zusätzlich eine zusätzliche mit dem Hohlrad verbundene Bremseinrichtung zum Festhalten des Hohlrades vorgesehen sein, insbesondere ist die zusätzliche Bremseinrichtung als mechanische Bremse, vorzugsweise Reibbremse, ausgebildet. Die zusätzliche Bremseinrichtung kann unabhängig von dem Elektromotor betrieben werden.

Vorzugsweise ist die zusätzliche Bremseinrichtung derart mit der Steuereinrichtung gekoppelt, dass im Überlastfall die zusätzliche Bremseinrichtung von dem Hohlrad entkoppelt und/oder die Bremsleistung reduziert oder abgeschaltet wird. Somit wird ermöglicht, dass durch Angreifen des Elektromotors an den Überlagerungszweig und somit an das Hohlrad eine Bewegung des Hohlrades sichergestellt werden kann. Die zusätzliche Bremseinrichtung kann dann das Hohlrad nicht mehr bremsen.

Besonders bevorzugt kann die zusätzliche Bremseinrichtung hydraulisch und/oder elektrisch lüftbar ausgebildet sein. Die zusätzliche Bremseinrichtung ermöglicht, dass elektrische Energie eingespart und Verlustwärme vermieden werden kann. Diese Vorteile ergeben sich insbesondere im Vergleich zur Ausführungsform des als Bremse wirkenden Elektromotors. Wenn die zusätzliche Bremseinrichtung bei fehlender Lüft-Ansteuerung bremst bzw. an dem Hohlrad anliegt, kann auch im Notfallbetrieb - das heißt bei Ausfall der Steuereinrichtung - die Bremsfunktion weiterhin am Hohlrad ermöglicht werden. Letztlich kann die zusätzliche Bremseinrichtung jedenfalls dann vom Hohlrad gelöst werden, wenn eine explizite Vorgabe durch die Steuereinrichtung erfolgt.

Weiterhin kann vorzugsweise die Steuereinrichtung derart ausgebildet sein, dass im Überlastfall der maximale Drehwinkel einer von dem Überlagerungszweig durch die vorgegebene Bewegung des Hohlrades, insbesondere durch die vorgegebene, zugelassene Drehbewegung, bewirkten Reversierbewegung der Walzenwelle zwischen 1° bis 50°, bevorzugt zwischen 2° bis 40°, weiter bevorzugt zwischen 5° bis 20°, liegt. Demzufolge dreht sich insbesondere die Walzenwelle und/oder die an der Walzenwelle angeordnete Zerkleinerungswalze mit einem vergleichsweise geringen bzw. begrenzten Drehwinkel gegenläufig zur ersten Drehrichtung zurück. Erfindungsgemäß ist festgestellt worden, dass eine derartige Reversierbewegung bereits ausreicht, um eingeklemmtes Aufgabegut aus der Klemmung zu befreien bzw. dieses wieder zu lockern, so dass es sich aus der Klemmung lösen lässt. Nach Erreichen des vorgegebenen maximalen Drehwinkels wird die Reversierbewegung der Walzenwelle bzw. der Zerkleinerungswalze gestoppt.

Vorzugsweise ist die Steuereinrichtung derart ausgebildet, dass nach maximal 10, bevorzugt maximal 8, weiter bevorzugt zwischen 2 bis 5, erfolgten Reversierbewegungen der Walzenwelle innerhalb von maximal 5 min, bevorzugt 0,2 bis 3 min, die Zerkleinerungsvorrichtung abgeschaltet wird. Es ist festgestellt worden, dass insbesondere nach einer solchen Anzahl der Reversierbewegungen in dem zuvor vorgegebenen Zeitintervall keine Lösung der Klemmung zu erwarten ist. Demzufolge ist ein händisches bzw. manuelles Eingreifen zur Säuberung der Zerkleinerungsvorrichtung und zur Lösung des eingeklemmten Aufgabegutes erforderlich. Dabei erkennt die Steuereinrichtung selbst, dass die Zerkleinerungsvorrichtung nicht selbst die Klemmung bzw. die Blockade lösen kann. Damit auch außenstehendes Bedienpersonal alarmiert werden kann, ist vorzugweise eine mit der Steuereinrichtung verbundene Signaleinrichtung vorgesehen. Die Signaleinrichtung kann ein optisches und/oder akustisches Warnsignal ausgeben, insbesondere wenn die Zerkleinerungsvorrichtung abgeschaltet wird oder abgeschaltet werden soll.

Die Steuereinrichtung kann insbesondere derart ausgebildet sein, dass, wenn sich die Drehzahl des Planetenträgers bzw. der Walzenwelle reduziert, dies durch eine von dem Überlagerungszweig hervorgerufene Überlagerungsbewegung kompensiert bzw. ausgeglichen werden kann. Dass sich die Drehzahl des Planetenträgers und/oder der Walzenwelle reduziert, kann dadurch erkannt werden, dass die Drehzahl der Walzenwelle des Hauptantriebes und/oder des Elektromotors überwacht wird und/oder dass das Drehmoment der Walzenwelle, des Hauptantriebes und/oder des Elektromotors überwacht wird. So kann beispielsweise vorgesehen sein, dass, wenn die Drehzahl der Walzenwelle sich um wenigstens 10 %, bevorzugt wenigstens 15 %, weiter bevorzugt wenigstens 20 %, reduziert, die Überlagerungsbewegung, die durch den Elektromotor des Überlagerungszweiges im Überlagerungsgetriebe herbeigeführt wird, die entsprechende Reduktion der Drehzahl auffangen kann. Dies kann insbesondere dazu führen, dass am Hauptantrieb keine wesentliche Erhöhung des Drehmomentes auftritt und der Hauptantrieb mit zumindest im Wesentlichen konstanter Drehzahl betrieben werden kann.

Bei einer weiteren ganz besonders bevorzugten Ausführungsform ist vorgesehen, dass das Überlagerungsgetriebe eine Gesamtübersetzung zwischen 20 bis 200, bevorzugt zwischen 50 bis 150, weiter bevorzugt zwischen 90 bis 110, insbesondere im Wesentlichen von 100 +/- 10, aufweist.

Ganz besonders bevorzugt liegt die Drehzahl der Walzenwelle während des regulären Betriebes der Zerkleinerungsvorrichtung zwischen 8 bis 30 U/min, bevorzugt zwischen 10 bis 20 U/min, weiter bevorzugt zwischen 15 bis 18 U/min. Erfindungsgemäß ist festgestellt worden, dass bei Drehzahlen der Walzenwelle der vorgenannten Größenordnung ein sehr gutes Zerkleinerungsergebnis des Aufgabegutes erreicht werden kann. Weiter kann vorgesehen sein, dass die Drehzahl der Walzenwelle in Abhängigkeit von dem Aufgabegut angepasst wird.

Ferner kann der Elektromotor des Überlagerungszweiges als Synchronmotor ausgebildet sein. Der Synchronmotor kann, insbesondere dauerhaft, Stillstandsmomente liefern, so dass durch das zuvor beschriebene Übersetzungsverhältnis das Zusammenwirken zwischen Hauptantrieb und Walzenwelle im Regelbetrieb sichergestellt werden kann.

Besonders bevorzugt ist vorgesehen, dass im Überlastfall und/oder im Lastfall - insbesondere bei einer Störung und/oder Blockade der Zerkleinerungswalze - über den Überlagerungszweig die Drehzahl der Walzenwelle viel schneller herabgeregelt werden kann, insbesondere im Vergleich zum Stand der Technik. Letztlich kann die Regeldynamik deutlich erhöht werden - dieser Vorteil ergibt sich insbesondere gegenüber einer sonst benötigten Regelung des Hauptantriebes. Vorzugsweise kann durch das durch den Überlagerungszweig ermöglichte Regelregime vermieden werden, dass zur Reduktion der Drehzahl der Walzenwelle große Schwungmomente aus hohen Drehzahlen abgebremst werden.

Bei einer weiteren ganz besonders bevorzugten Ausführungsform ist vorgesehen, dass der Elektromotor, insbesondere ausgebildet als Zusatzantriebsaggregat, in zwei unterschiedliche Drehrichtungen beaufschlagbar ist. So kann der Elektromotor - beispielsweise nach entsprechender Vorgabe durch die Steuereinrichtung - eine Bewegung des Hohlrades auch zum Anlaufen des Hauptantriebes bzw. zur Unterstützung des Hauptantriebes zulassen. Außerdem kann durch den Elektromotor und den mit dem Elektromotor verbundenen Überlagerungszweig eine Beaufschlagung auf die durch den Hauptantrieb vorgegebene Drehmomentübertragung bzw. - beaufschlagung erfolgen. Insbesondere kann der Elektromotor den Hauptantrieb derart unterstützen, dass die Abtriebsdrehzahl der Zerkleinerungswalze bzw. der Walzenwelle durch die zusätzliche Unterstützung mit dem Elektromotor erhöht wird, insbesondere um wenigstens 10 %, bevorzugt um 10 % bis 200 %, weiter bevorzugt zwischen 50 % bis 120 %, weiter bevorzugt weiter zwischen 70 % bis 100 %. Somit kann der erreichte Drehzahlbereich der Walzenwelle durch die von dem Elektromotor aufgegebene Überlagerungsbewegung vergrößert und insbesondere auch, vorzugsweise stufenlos, mittels des Überlagerungszweiges durchfahren werden. Der durch die unterschiedliche Beaufschlagung des Elektromotors in verschiedene Drehrichtungen erreichte erhöhte Drehzahlbereich der Walzenwelle kann insbesondere dafür eingesetzt werden, dass sich die Zerkleinerungsvorrichtung an unterschiedliche Verarbeitungsaufgaben anpasst. Demzufolge kann durch den Elektromotor und somit durch den Überlagerungszweig eine Überlagerungsbewegung im Überlagerungsgetriebe hervorgerufen werden, die entweder die durch den Hauptantrieb auf die Walzenwelle aufgegebene Drehzahl verringert oder erhöht.

Vorzugsweise weist der Elektromotor eine Leistung zwischen 30 bis 200 kW, bevorzugt zwischen 50 bis 150 kW, weiter bevorzugt zwischen 60 bis 100 kW, auf. Eine Leistung in der vorgenannten Größenordnung ermöglicht es, die Reversierbewegung der Zerkleinerungswalze sicherzustellen und ferner die Antriebsdrehmomentübertragung bzw. -beaufschlagung zwischen dem Hauptantrieb und der Walzenwelle zu unterbrechen.

Bei einer weiteren und bevorzugten Ausführungsform ist vorgesehen, dass der Hauptantrieb als weiterer Elektromotor ausgebildet ist. Ist der Hauptantrieb als weiterer Elektromotor ausgebildet, wird die Möglichkeit eröffnet, das Antriebssystem für die Zerkleinerungsvorrichtung vollelektrisch auszubilden. So kann auf Verbrennungsmotoren verzichtet werden. Insbesondere ermöglicht dies, eine ökologische bzw. ressourcenschonende Zerkleinerungsvorrichtung bereitzustellen. Alternativ oder zusätzlich kann auch vorgesehen sein, dass der Hauptantrieb als Verbrennungsmotor, vorzugsweise als Dieselmotor, ausgebildet ist. Durch das erfindungsgemäße Antriebssystem kann insbesondere ein Dieselmotor eingesetzt werden, der in seiner Drehzahl stark beschränkt regelbar ist.

Des Weiteren kann der Hauptantrieb eine Leistung zwischen 100 bis 700 kW, bevorzugt von 200 bis 500 kW, weiter bevorzugt von 130 bis 500 kW und vorzugsweise zwischen 300 bis 350 kW, aufweisen. Insbesondere ist vorgesehen, dass die Leistung des Hauptantriebes größer als die Leistung des Elektromotors des Überlagerungszweiges ist. Bevorzugt kann die Leistung des Hauptantriebes um wenigstens 50 %, bevorzugt zwischen 70 % bis 500 %, weiter bevorzugt zwischen 80 % bis 150 %, größer ausgebildet sein.

Ferner kann auch vorgesehen sein, dass die Drehzahl des Hauptantriebes veränderbar, insbesondere regelbar, bevorzugt stufenlos regelbar, ausgebildet ist. Allerdings wird eine derartige Regelung der Drehzahl zumindest nicht zwingend benötigt, da eine Drehzahlveränderung der Zerkleinerungswalze bzw, der Walzenwelle durch den Überlagerungszweig und die in dem Überlagerungsgetriebe durch den Überlagerungszweig aufgegebene Überlagerungsbewegung erreicht werden kann.

Bei einer weiteren Ausführungsform des vorliegenden Erfindungsgedankens ist vorgesehen, dass das Überlagerungsgetriebe als Anlaufregelgetriebe der Zerkleinerungsvorrichtung, insbesondere zum Anlaufen des Hauptantriebs unter Last, ausgebildet ist. Beispielsweise kann das Anlaufregelgetriebe jedenfalls dann verwendet werden, wenn der Betrieb der Zerkleinerungsvorrichtung nach erfolgter Reversierbewegung wieder aufgenommen wird. Wie zuvor erläutert, kann der Überlagerungszweig und insbesondere der Elektromotor des Überlagerungszweiges in diesem Fall unterstützend wirken - das heißt unterstützend zum Hauptantrieb. Dafür kann eine andere Drehrichtung des Elektromotors vorgesehen sein - im Vergleich zu der für die Reversierbewegung benötigte Drehrichtung des Elektromotors des Überlagerungszweiges.

Darüber hinaus betrifft die vorliegende Erfindung eine Zerkleinerungsvorrichtung vorgesehen zur Zerkleinerung von, insbesondere zum Wickeln neigendem, Aufgabegut, vorzugsweise Hausmüll, Bioabfall, Sperrmüll, Baumischabfall, Holzmaterialien, insbesondere Altholz, Stammholz, Wurzelholz und/oder Grünschnitt, und/oder Gewerbemüll, mit wenigstens einer Walzenwelle, einer an der Walzenwelle angeordneten Zerkleinerungswalze mit daran befestigten Zerkleinerungswerkzeugen und einem Antriebssystem mit den konstruktiven Merkmalen nach einem der vorhergehenden Ausführungsformen.

In diesem Zusammenhang versteht es sich, dass im Hinblick auf Vorteile und bevorzugte Ausführungsformen auf die vorstehenden Ausführungen verwiesen werden darf. Diese Ausführungen gelten in gleicher Weise erfindungsgemäß auch für die Zerkleinerungsvorrichtung.

Die Zerkleinerungswerkzeuge der Zerkleinerungswalze können mit Gegenzerkleinerungswerkzeugen zusammenwirken. Letztlich kann die Zerkleinerungsvorrichtung insbesondere derart ausgebildet sein, dass ein Spalt zwischen den Zerkleinerungswerkzeugen und den Gegenzerkleinerungswerkzeugen hervorgerufen wird, mittels dem eine Zerkleinerung des Aufgabegutes durch die Drehbewegung der Zerkleinerungswalze erfolgt.

Vorzugsweise ist die Zerkleinerungswalze drehfest mit der Walzenwelle verbunden.

Bei einer besonders bevorzugten Ausführungsform ist vorgesehen, dass das Überlagerungsgetriebe des Antriebssystems im Antriebsstrang zwischen Hauptantrieb und Walzenwelle angeordnet ist. Somit erfolgt die Beaufschlagung des Drehmomentes bzw. der Leistung vom Hauptantrieb über das Überlagerungsgetriebe auf die Walzenwelle. Demzufolge ist es durch den Überlagerungszweig des Überlagerungsgetriebes möglich, die Antriebsdrehmomentbeaufschlagung von dem Hauptantrieb zu der Walzenwelle zu unterbinden oder aber zumindest im Wesentlichen zu reduzieren. So kann der Drehmomentfluss zwischen Hauptantrieb und Walzenwelle zu "Null" kompensiert werden.

Ferner kann die Steuereinrichtung derart ausgebildet sein, dass sich die Drehzahl der Zerkleinerungsvorrichtung selbst regelt, insbesondere in Abhängigkeit von der Zerkleinerungsleistung und/oder in Abhängigkeit von der jeweiligen Betriebssituation der Zerkleinerungsvorrichtung. So kann bereits rechtzeitig auf einen drohenden Überlastfall reagiert werden, insbesondere indem eine Überlagerungsbewegung im Überlagerungsgetriebe durch den Überlagerungszweig mittels des Elektromotors hervorgerufen wird. So kann ein zumindest im Wesentlichen kontinuierlicher Betrieb der Zerkleinerungsvorrichtung ermöglicht werden. Beispielsweise kann auch so vermieden werden, dass eine Reversierbewegung unbedingt erforderlich ist. Die Reversierbewegung kann insbesondere dann erfolgen, falls zuvor eingeleitete Maßnahmen - beispielsweise die Überlagerungsbewegung im Überlagerungsgetriebe - nicht ausreichen, den Überlastfall abzuwenden oder zu beheben. Dies kann durch entsprechende Vorgaben in der Steuereinrichtung überwacht werden.

Im Übrigen versteht es sich, dass in den vorgenannten Intervallen und Bereichsgrenzen jegliche Zwischenintervalle und Einzelwerte enthalten und als erfindungswesentlich offenbart anzusehen sind, auch wenn diese Zwischenintervalle und Einzelwerte nicht konkret angegeben sind.

Weitere Merkmale, Vorteile und Anwendungsmöglichkeiten der vorliegenden Erfindung ergeben sich aus der nachfolgenden Beschreibung von Ausführungsbeispielen anhand der Zeichnung und der Zeichnung selbst. Dabei bilden alle beschriebenen und/oder bildlich dargestellten Merkmale für sich oder in beliebiger Kombination den Gegenstand der vorliegenden Erfindung, unabhängig von ihrer Zusammenfassung in den Ansprüchen oder deren Rückbeziehung.

Es zeigt:
- Fig. 1: eine schematische Darstellung eines erfindungsgemäßen Antriebs-systems,
- Fig. 2: eine schematische Darstellung der Verwendung einer weiteren Ausführungsform des erfindungsgemäßen Antriebssystems für eine Zerkleinerungsvorrichtung,
- Fig. 3: eine schematische Darstellung eines erfindungsgemäßen Überlagerungsgetriebes,
- Fig. 4: eine schematische Querschnittsansicht einer weiteren Ausführungsform des erfindungsgemäßen Überlagerungsgetriebes,
- Fig. 5: eine schematische perspektivische Darstellung einer erfindungsgemäßen Zerkleinerungsvorrichtung,
- Fig. 6: eine schematische perspektivische Darstellung von Teilen einer weiteren Ausführungsform der erfindungsgemäßen Zerkleinerungsvorrichtung und
- Fig. 7: eine schematische Querschnittsdarstellung einer weiteren Ausführungsform des erfindungsgemäßen Überlagerungsgetriebes mit einer zusätzlichen Bremseinrichtung.

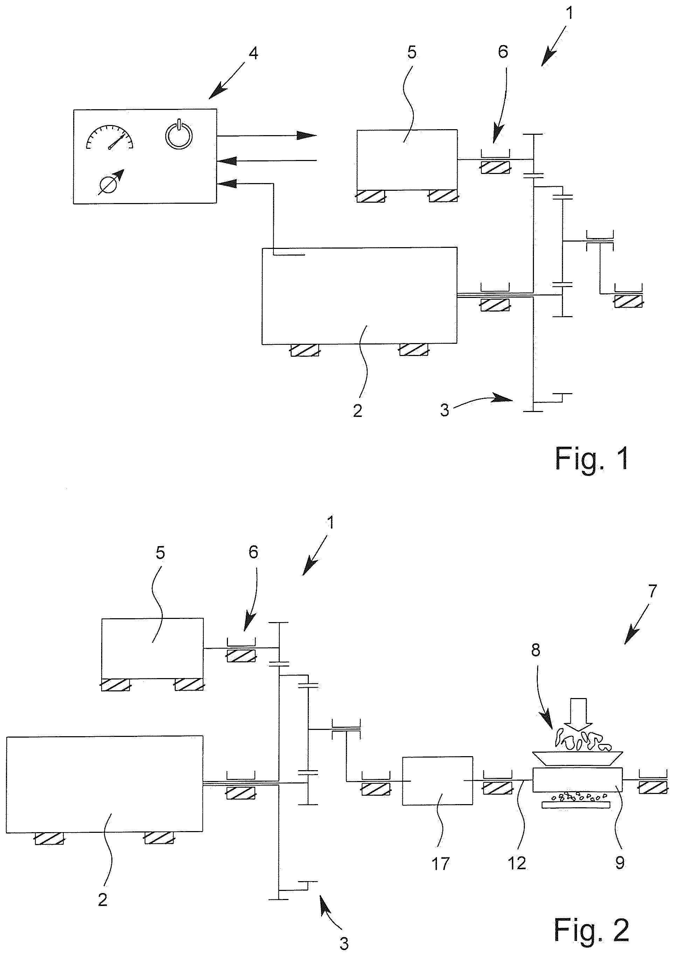

Fig. 1 zeigt ein Antriebssystem 1 mit einem Hauptantrieb 2, einem mit dem Hauptantrieb 2 gekoppelten Überlagerungsgetriebe 3 und einer Steuereinrichtung 4. Zum Antrieb des Überlagerungsgetriebes 3 ist ein mit der Steuereinrichtung 4 gekoppelter Elektromotor 5 für einen Überlagerungszweig 6 des Überlagerungsgetriebes 3 vorgesehen.

Fig. 2 zeigt die Verwendung des Antriebssystems 1 für eine Zerkleinerungsvorrichtung 7. Die Zerkleinerungsvorrichtung 7 dient zur Zerkleinerung von Aufgabegut 8, wie dies schematisch in Fig. 2 dargestellt ist. Als Aufgabegut 8 kann insbesondere Hausmüll, Bioabfall, Sperrmüll, Baumischabfall, Holzmaterialien, insbesondere Altholz, Stammholz, Wurzelholz und/oder Grünschnitt, und/oder Gewerbemüll vorgesehen sein. Insbesondere ist das Aufgabegut 8 zum Wickeln neigendes Gut oder beinhaltet zum Wickeln neigendes Gut.

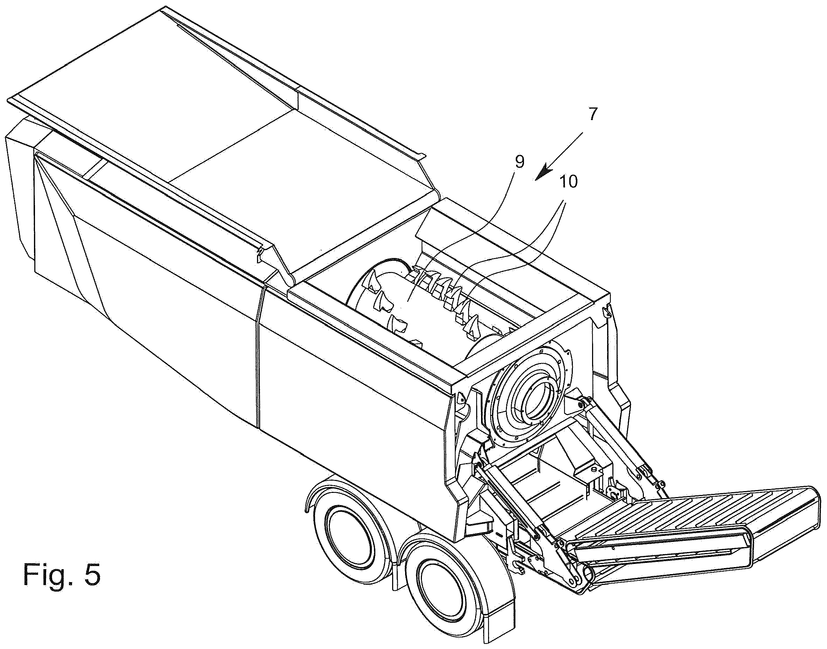

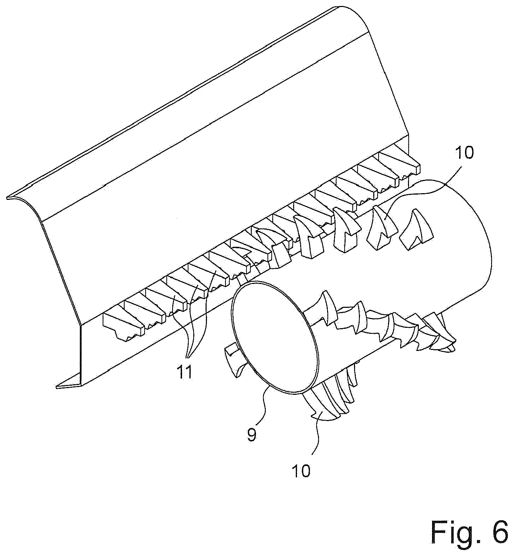

Fig. 5 zeigt, dass die Zerkleinerungsvorrichtung 7 eine Zerkleinerungswalze 9 aufweist. An der Zerkleinerungswalze 9 können Zerkleinerungswerkzeuge 10 angeordnet sein, die zur Zerkleinerung des Aufgabegutes 8 dienen. Fig. 6 zeigt, dass die Zerkleinerungswerkzeuge 10 mit Gegenzerkleinerungswerkzeugen 11 zusammenwirken. Die Zerkleinerungswalze 9 kann mit einer Walzenwelle 12 gekoppelt, insbesondere drehfest verbunden, sein.

In Fig. 2 ist gezeigt, dass das Antriebssystem 1 zum Antrieb der Walzenwelle 12 ausgebildet ist. Dabei dient der Hauptantrieb 2 zur Erzeugung einer Drehbewegung der Walzenwelle 12 der Zerkleinerungsvorrichtung 7.

Die Steuereinrichtung 4 ist zum Detektieren eines Überlastfalls der Zerkleinerungsvorrichtung 7 ausgebildet. Weiter kann die Steuereinrichtung 4 derart ausgebildet sein, dass sie die Betriebssituation, vorzugsweise kontinuierlich, der Zerkleinerungsvorrichtung 7 überwacht. Ein Überlastfall kann dann auftreten, wenn sich Aufgabegut 8 zwischen den Zerkleinerungswerkzeugen 10 und den Gegenzerkleinerungswerkzeugen 11 verkeilt. Dies kann zur Blockade der Zerkleinerungswalze 9 und somit der Walzenwelle 12 führen. Im Überlastfall sinkt die Drehzahl der Walzenwelle 12 bis hin zu einer Blockade mit 0 U/min. Da der Hauptantrieb 2 weiterhin zum Antrieb der Walzenwelle 12 ausgebildet ist sowie eingesetzt wird (letztlich um eine Drehung der Walzenwelle 12 zu erreichen), liegen hohe Drehmomente am Hauptantrieb 2 an, die die Drehmomente der Regelbetriebssituation - das heißt während des regulären, normalen Betriebes der Zerkleinerungsvorrichtung 7 - zum Teil erheblich übersteigen. Zudem tritt dann auch ein Anstieg des Drehmomentes am Elektromotor 5 auf, da der Elektromotor 5 während der Regelbetriebssituation insbesondere zum Halten bzw. Festhalten des Überlagerungszweiges 6 ausgebildet ist, so dass die gewünschte Drehmomentbeaufschlagung von dem Hauptantrieb 2 zu der Walzenwelle 12 erfolgen kann.

Bei dem in Fig. 1 gezeigten Antriebssystem 1 ist vorgesehen, dass die Steuereinrichtung 4 derart ausgebildet ist, dass der Elektromotor 5 des Überlagerungszweiges 6 im Überlastfall dahingehend von der Steuereinrichtung 4 angesteuert wird, dass der Überlagerungszweig 6 des Überlagerungsgetriebes 3 eine Überlagerungsbewegung im Überlagerungsgetriebe 3 hervorruft, so dass die Antriebsdrehmomentbeaufschlagung von dem Hauptantrieb 2 zu der Walzenwelle 12 zumindest im Wesentlichen unterbunden oder aber reduziert werden kann.

Eine Unterbindung der Antriebsdrehmomentbeaufschlagung bzw. -übertragung ist insbesondere derart zu verstehen, dass letztlich die Antriebsleistungsbeaufschlagung von dem Hauptantrieb 2 zu der Walzenwelle 12 zumindest im Wesentlichen unterbunden bzw. entkoppelt wird. Letztlich wird der Drehmomentfluss zu "Null" kompensiert. Dann führt der Antrieb des Hauptantriebes 2 nicht mehr zum Antrieb der Walzenwelle 12. Die Kopplung zwischen Hauptantrieb 2 und Walzenwelle 12 kann letztlich durch die Überlagerungsbewegung im Überlagerungsgetriebe 3 unterbunden bzw. kompensiert werden. Dadurch können die hohen unerwünschten Drehmomente am Hauptantrieb 2 vermieden werden, da der Hauptantrieb 2 insbesondere weiter angetrieben werden kann, ohne dass er abgeschaltet oder heruntergeregelt werden muss. Letztlich kann der Hauptantrieb 2 wie im Regelbetrieb weiter betrieben werden. Durch die Überlagerungsbewegung, die durch den Überlagerungszweig 6 hervorgerufen wird, kann ein diesbezüglicher Antrieb des Hauptantriebes 2 kompensiert werden. Dies wird letztlich im Überlastfall dann erforderlich, wenn eine Blockade der Zerkleinerungswalze 9 und somit der Walzenwelle 12 zu erwarten ist, was von der Steuereinrichtung 4 erfasst und als Überlastfall eingestuft wird. In diesem Zusammenhang kann vorgesehen sein, dass die im Überlagerungsgetriebe 3 von dem Überlagerungszweig 6 hervorgerufene Überlagerungsbewegung zu einer Drehzahl der Walzenwelle von 0 U/min führt, obwohl der Hauptantrieb 2 angetrieben ist. Letztlich wird der Überlastfall oder der drohende Überlastfall von der Steuereinrichtung 4 als solcher erkannt, wenn die Drehzahl der Walzenwelle nur noch weniger als 75 %, vorzugsweise weniger als 50 % und insbesondere weniger als 25 % der Drehzahl während des Regelbetriebes ist. Bevorzugt ist es, wenn die Drehzahl, bei der der Überlastfall erkannt wird, mittels oder in der Steuereinrichtung 4 einstellbar ist.

Während des Betriebes der Zerkleinerungsvorrichtung 7 können unterschiedliche Betriebssituationen vorhanden sein. Als wesentliche Betriebssituationen lassen sich die Regelbetriebssituation, die Lastsituation und schließlich der Überlastfall klassifizieren.

Bei der Regelbetriebssituation ist eine Antriebsdrehmomentübertragung und/oder - beaufschlagung bzw. aufgrund der Rotation des Hauptantriebs 2 eine Antriebsleistungsbeaufschlagung von dem Hauptantrieb 2 zu der Walzenwelle 12 vorgesehen, was wiederum zur Drehung der Zerkleinerungswalze 9 führt.

In einer Lastsituation sinkt die Drehgeschwindigkeit bzw. die Drehzahl der Zerkleinerungswalze 9 und somit der Walzenwelle 12. Dies kann letztlich aufgrund der Zerkleinerung von bestimmtem Aufgabegut 8 eintreten. Bei der Zerkleinerung steigt typischerweise das Drehmoment an der Walzenwelle 12, wodurch die Drehzahl am Hauptantrieb 2 sinken kann. Eine derartige Lastsituation benötigt jedoch nicht zwingenderweise eine von dem Überlagerungszweig 6 hervorgerufene Überlagerungsbewegung im Überlagerungsgetriebe 3. Dies wird allerdings im Überlastfall erforderlich.

Fig. 2 zeigt, dass der Antriebsstrang des Antriebssystems 1 im Sinne der Betrachtung aus Richtung des Hauptantriebs 2 in Richtung des Abtriebs zunächst den Hauptantrieb 2, anschließend das Überlagerungsgetriebe 3 und dann die Walzenwelle 12 umfasst. An dem Überlagerungsgetriebe 3 greift auch der Überlagerungszweig 6 an. Somit ist ein Drei-Wellen-Betrieb des Antriebsstrangs des Antriebssystems 1 vorgesehen. Die Walzenwelle 12 ist letztlich die Abtriebswelle, wobei am Hauptantrieb 2 die Antriebswelle vorgesehen ist und wobei der Überlagerungszweig eine Antriebs-, Abtriebs- oder Stillstandswelle aufweist. In der Regelbetriebssituation wird das Drehmoment zumindest im Wesentlichen vollständig von dem Hauptantrieb 2 auf die Walzenwelle 12 übertragen - in Abhängigkeit von dem durch das Überlagerungsgetriebe 3 vorgegebenen Übersetzungsverhältnis. In der Regelbetriebssituation ist der Überlagerungszweig 6 stillstehend ausgebildet, wobei der Elektromotor 5 als und/oder in Kombination mit einer separaten Bremse auf den Überlagerungszweig 6 wirken kann.

Bei dem in Fig. 2 dargestellten Ausführungsbeispiel ist vorgesehen, dass die Kopplung bzw. das Zusammenwirken zwischen der Steuereinrichtung 4 und dem Elektromotor 5 des Überlagerungszweiges 6 derart ausgebildet ist, dass die Steuereinrichtung 4 im Überlastfall den Elektromotor 5 des Überlagerungszweiges 6 dahingehend ansteuert, dass die Drehrichtung der Walzenwelle 12 für eine Reversierbewegung umgekehrt wird. Eine Umkehr der Drehrichtung der Walzenwelle 12 ist insbesondere derart zu verstehen, dass die von dem Hauptantrieb 2 ursprünglich vorgegebene Drehrichtung in der Regelbetriebssituation der Zerkleinerungsvorrichtung 7 umgekehrt wird. Eine derartige Umkehr der Drehrichtung führt dazu, dass sich die Walzenwelle 12 und somit die Zerkleinerungswalze 9 gegenläufig zur Betriebsdrehrichtung dreht. Sollte sich Aufgabegut 8 zwischen den Zerkleinerungswerkzeugen 10 und den Gegenzerkleinerungswerkzeugen 11 oder an einer anderen Stelle in der Zerkleinerungsvorrichtung 7 verkeilt und/oder eingeklemmt haben, kann dies zur Lockerung des verkeilten Aufgabegutes 8 führen. Demzufolge wird für die Zerkleinerungsvorrichtung 7 die Möglichkeit eröffnet, sich selbstständig aus einer Blockade und/oder Klemmung zu befreien.

Bei der in Fig. 1 dargestellten schematischen Kopplung zwischen der Steuereinrichtung 4 und dem Elektromotor 5 ist vorgesehen, dass die Steuereinrichtung 4 derart ausgebildet ist, dass der Elektromotor 5 des Überlagerungszweiges 6 weiter dahingehend von der Steuereinrichtung 4 angesteuert wird, dass die Drehzahl, das Drehmoment und/oder die Leistung des Hauptantriebes 2 während des Betriebes der Zerkleinerungsvorrichtung 7 und insbesondere im Überlastfall zumindest im Wesentlichen konstant bleiben kann. Zumindest im Wesentlichen konstant bedeutet dabei eine maximale Abweichung von der eingestellten Regeldrehzahl von maximal +/- 40 %, vorzugsweise maximal +/- 30 %. Alternativ oder zusätzlich kann vorgesehen sein, dass die Drehzahl, das Drehmoment und/oder die Leistung des Hauptantriebes 2 während des Betriebes der Zerkleinerungsvorrichtung 7 und insbesondere im Überlastfall innerhalb eines Toleranzbereiches liegt, der insbesondere bei +/- 10 % Schwankung um den Regelwert der Drehzahl, das Drehmoment und/oder der Leistung in der Regelbetriebssituation liegt. Letztlich kann der Hauptantrieb 2 konstant mit gleicher Leistung und/oder Drehzahl angetrieben sein und muss insbesondere im Überlastfall nicht abgeschaltet oder heruntergeregelt werden. In diesem Zusammenhang bewirkt das Überlagerungsgetriebe 3 die Entkopplung des Hauptantriebes 2 von der Walzenwelle 12, insbesondere indem der Elektromotor 5 entgegen dem Hauptantrieb 2 wirkt. Die Drehzahl des Hauptantriebes 2 kann in weiteren Ausführungsformen zwischen 1000 bis 3000 U/min, bevorzugt zwischen 1300 bis 2000 U/min und insbesondere zwischen 1500 bis 1800 U/min, liegen.

Die in Fig. 1 dargestellte Steuereinrichtung 4 kann somit zur Steuerung und/oder Regelung des Betriebes der Zerkleinerungsvorrichtung 7 vorgesehen sein, da sie letztlich die Wirkungsweise des Elektromotors 5 und somit des Überlagerungszweiges 6 bestimmen kann. Bei dem in Fig. 1 dargestellten Ausführungsbeispiel ist vorgesehen, dass die Steuereinrichtung 4 zur Überwachung des Drehmomentes des Elektromotors 5 des Überlagerungszweiges 6 und/oder zur Überwachung des Drehmomentes des Hauptantriebes 2 ausgebildet ist. Nicht dargestellt ist, dass in weiteren Ausführungsformen die Steuereinrichtung 4 auch zur Überwachung der Drehzahl der Walzenwelle 12 und/oder der Zerkleinerungswalze 9 ausgebildet sein kann. Hierzu sind dann entsprechende Überwachungsmittel vorgesehen, die mit der Steuereinrichtung 4 gekoppelt sind.

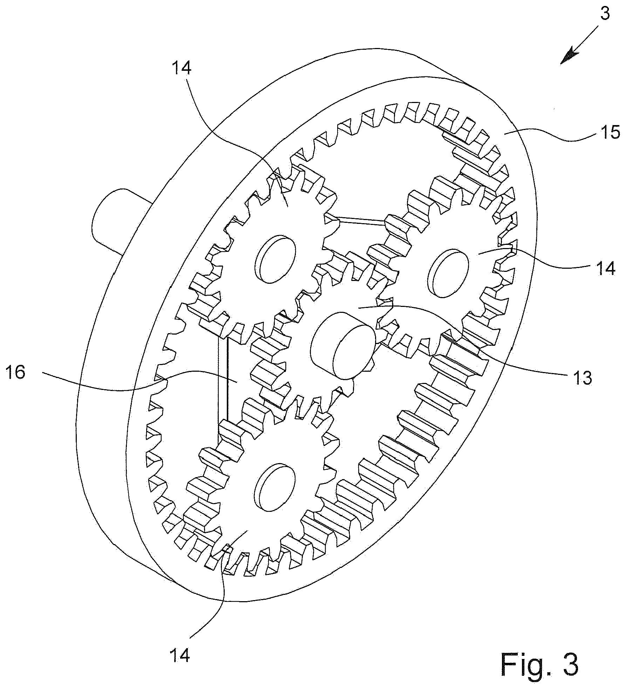

Fig. 3 zeigt, dass das Überlagerungsgetriebe 3 ein Planeten-Überlagerungsgetriebe ist. Das Planeten-Überlagerungsgetriebe 3 umfasst ein Sonnenrad 13, wenigstens ein mit dem Sonnenrad 13 zusammenwirkendes Planetenrad 14 und wenigstens ein mit dem Planetenrad 14 zusammenwirkendes Hohlrad 15.

Bei dem in Fig. 3 dargestellten Ausführungsbeispiel ist eine Mehrzahl an Planetenrädern 14 vorgesehen, die miteinander über einen Planetenradträger 16 verbunden sind.

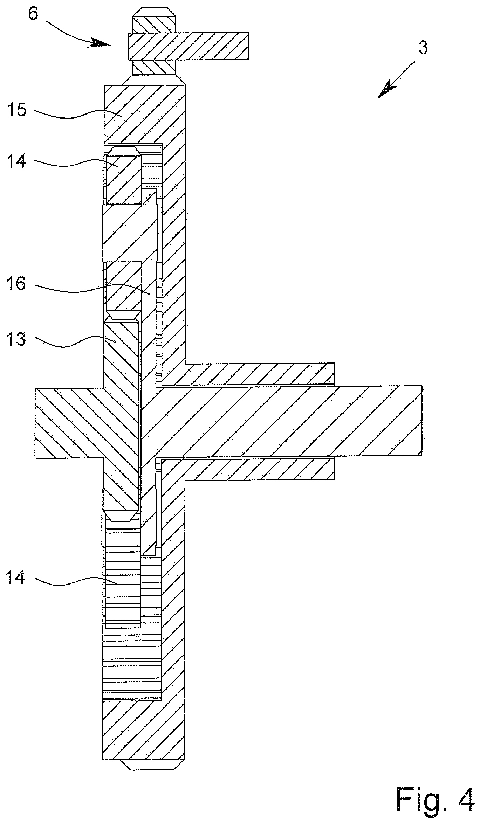

Fig. 4 zeigt schematisch das Planeten-Überlagerungsgetriebe 3 in einer Querschnittsansicht. Das Sonnenrad 13 ist mit einer Welle gekoppelt, die wiederum an den Hauptantrieb 2 angreift (nicht dargestellt). Der Hauptantrieb 2 greift folglich an dem Sonnenrad 13 an.

Der Überlagerungszweig 6 greift an das Hohlrad 15 an bzw. umfasst dieses. Der Elektromotor 5 wiederum ist mit dem Überlagerungszweig 6 verbunden. In dem dargestellten Ausführungsbeispiel ist dargestellt, dass der Überlagerungszweig 6 mit dem Hohlrad 15 zusammenwirkt.

Das Hohlrad 15 kann somit auch als Bestandteil des Überlagerungszweiges 6 angesehen werden, der zur Aufgabe bzw. Überlagerung einer Überlagerungsbewegung im Überlagerungsgetriebe 3 vorgesehen ist. Der Elektromotor 5 kann in diesem Zusammenhang als Zusatzantriebsaggregat fungieren.

Die Walzenwelle 12 kann mit dem Planetenradträger 16, wie in Fig. 4 schematisch dargestellt, verbunden sein.

Nicht dargestellt ist, dass die Walzenwelle 12 angreifend mit wenigstens einem Planetenrad 14 verbunden ist.

Fig. 3 zeigt, dass die Planetenräder 14 sowie das Sonnenrad 13 als Zahnräder ausgebildet sind, die miteinander durch Verzahnung zusammenwirken bzw. miteinander kämmen. Das Hohlrad 15 weist eine zur Verzahnung der Planetenräder 14 korrespondierende Verzahnung auf, um mit den Planetenrädern 14 zusammenzuwirken. Dabei ermöglicht das Planeten-Überlagerungsgetriebe 3 eine hohe Übersetzung bei einer geringen Baugröße.

Bei dem in Fig. 2 dargestellten Ausführungsbeispiel des Antriebssystems 1 ist vorgesehen, dass eine erste Getriebestufe mit dem Überlagerungseingang und dem zusätzlichen Nebenantrieb des Überlagerungszweiges 6 vorgesehen ist. Fig. 2 zeigt weiter eine weitere Getriebebaugruppe 17, die eine feste aber auch eine einstellbare Übersetzung mit unterschiedlichen Getriebestufen aufweisen kann. Dabei kann die weitere Getriebebaugruppe 17 an dem Planetenradträger 16 und/oder an wenigstens einem Planetenrad 14 angeordnet und/oder damit verbunden sein. Die Walzenwelle 12 kann wiederum an der weiteren Getriebebaugruppe 17 angeordnet sein und/oder damit verbunden sein.

Unter einer "verbundenen" Anordnung ist zu verstehen, dass die jeweiligen Baugruppen letztlich mit der jeweiligen Welle zum Antrieb zusammenwirken und miteinander gekoppelt sind. Dabei können - jedoch müssen nicht - diese Komponenten unmittelbar miteinander verbunden sein.

Bei dem in Fig. 1 dargestellten Elektromotor 5 ist vorgesehen, dass der Elektromotor 5 des Überlagerungszweiges 6 als Bremse mit insbesondere veränderbarer Bremswirkung ausgebildet ist. Somit kann der Elektromotor 5 zum Festhalten und/oder zur Sperrung des Überlagerungszweiges 6 während des Regelbetriebes der Zerkleinerungsvorrichtung 7 ausgebildet sein, wie auch Fig. 4 zeigt. Dabei kann der Elektromotor 5 sicherstellen, dass während des Regelbetriebes der Zerkleinerungsvorrichtung 7 keine Überlagerungsbewegung im Überlagerungsgetriebe 3 stattfindet. Der Überlagerungszweig 6 kann beispielsweise ein Zahnrad umfassen, das mit dem Hohlrad 15 zum Festhalten des Hohlrades 15 und/oder zum Antrieb des Hohlrades 15 gekoppelt ist.

Der Überlagerungszweig 6 kann auf das Hohlrad 15 als mechanische Haltebremse wirken und ein Stillstand des Hohlrades 15 während des Regelbetriebes erzwingen. Insbesondere ist dabei keine Reibbremse oder ähnliches erforderlich. Die Bremswirkung kann also ausschließlich durch den Elektromotor 5 erfolgen. Der als Bremse wirkende Elektromotor 5 kann eine Drehzahlanpassung der Walzenwelle 12 hervorrufen, insbesondere durch Verringerung der Bremswirkung. Der als Bremse wirkende Überlagerungszweig 6 kann insbesondere funktional die Drehachse des Elektromotors 5 (auch Überlagerungsmotor genannt) verlängern und/oder zumindest teilweise in Verlängerung der Drehachse des Elektromotors 5 angeordnet sein.

Insbesondere kann eine vom Elektromotor separate Bremse des Überlagerungszweiges 6 energielos und/oder stromlos - bezogen auf ein Lüftelement der Bremse - durch Federdruck geschlossen sein. Dies ermöglicht es, für den Notfallbetrieb - das heißt bei Ausfall der Regelung und/oder der Steuereinrichtung 4 - das Lüftelement elektrisch zu betreiben. So kann durch eine federbeaufschlagte Bremse der Leistungsbetrieb bei stillstehendem Hohlrad auch bei Ausfall der Regelung weiterhin möglich sein. Insbesondere ist vorgesehen, dass die separate Bremse nur gelöst wird, wenn gleichzeitig der Elektromotor 5 die Bremsfunktion bzw. die Stütz- und Gegenmomente übernimmt.

Die Steuereinrichtung 4 kann derart ausgebildet sein, dass der Elektromotor 5 im Überlastfall dahingehend angesteuert wird, dass er mit dem Hohlrad 15 zusammenwirkt, so dass eine Drehung des Hohlrades 15 ermöglicht wird. Diese Bewegung des Hohlrades 15 kann durch eine Verringerung der Bremswirkung des Elektromotors 5 auf das Hohlrad 15 ermöglicht und/oder zugelassen werden. Somit wird eine Drehung des Hohlrades 15 zur Entkopplung und/oder Reduktion der Antriebsdrehmomentbeaufschlagung von dem Sonnenrad 13 auf den Planetenradträger 16 gewährleistet und/oder zugelassen. Durch eine Verringerung der Bremswirkung des Elektromotors 5 kann eine Überlagerungsbewegung im Überlagerungsgetriebe 3 (durch die zugelassene Drehung des Hohlrades 15) ermöglicht werden.

Weiter kann vorgesehen sein, dass die Drehzahl des Hohlrades 15 durch Ansteuerung der Steuereinrichtung 4 derart erhöht wird, dass eine Umkehr der Drehrichtung der Walzenwelle 12 und insbesondere der Zerkleinerungswalze 9 bewirkt wird. Dies ermöglicht eine Reversierbewegung der Zerkleinerungswalze 9, die durch die Überlagerungsbewegung im Überlagerungsgetriebe 3 hervorgerufen wird. Der Elektromotor 5 kann dabei derart mit der Steuereinrichtung 4 gekoppelt sein, dass die Reversierbewegung lediglich für eine gewisse Zeit und/oder einen gewissen Bereich (beispielsweise gemessen am Drehwinkel insbesondere der Walzenwelle 12 oder der Zerkleinerungswalze 9) sichergestellt wird. Anschließend kann durch erneutes Festhalten bzw. Bremsen des Hohlrades 15 die Antriebsdrehmomentbeaufschlagung von dem Sonnenrad 13 zu dem Planetenradträger 16 wieder ermöglicht werden, was zur erneuten Umkehr der Drehrichtung der Walzenwelle 12 in die durch den Hauptantrieb 2 vorgegebene Drehrichtung der Walzenwelle 12 führt.

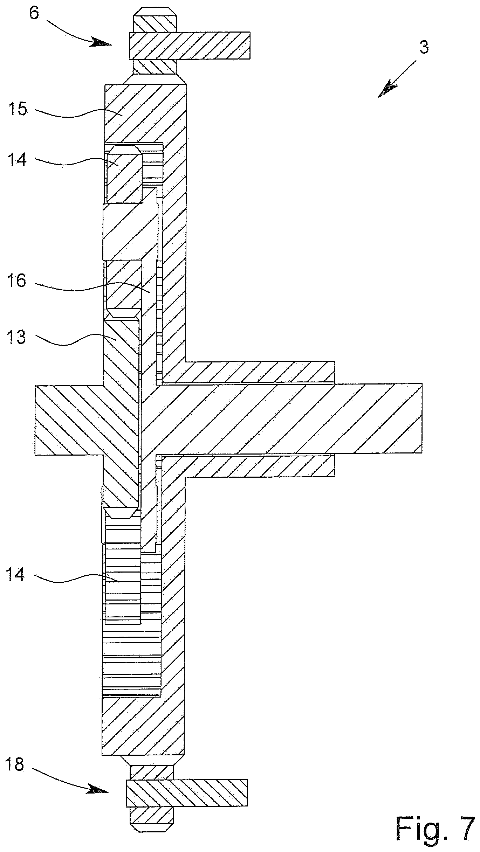

Fig. 7 zeigt, dass eine zusätzliche mit dem Hohlrad 15 verbundene Bremseinrichtung 18 als mechanische Bremse, vorzugsweise Reibbremse, ausgebildet ist. Die zusätzliche Bremseinrichtung 18 kann zusätzlich zu dem Überlagerungszweig 6 vorgesehen sein. Die mechanische Bremse kann in der zuvor im Zusammenhang mit dem Lüftelement beschriebenen Weise ausgebildet sein.

Die in Fig. 1 dargestellte Steuereinrichtung 4 kann derart ausgebildet sein, dass im Überlastfall der maximale Drehwinkel einer vom Überlagerungszweig 6 durch die vorgegebene Bewegung des Hohlrades 15 bewirkte Umkehrdrehbewegung der Walzenwelle 12 der Reversierbewegung zwischen 1° bis 50° liegt. In weiteren Ausführungsformen kann der Drehwinkel zwischen 5° bis 20° liegen. Demzufolge kann sich die Zerkleinerungswalze 9 nur um den maximalen Drehwinkel drehen, was bereits ausreicht, um verkeiltes Aufgabegut 8 aus der Klemmung zu befreien.

Zudem kann die Steuereinrichtung 4 derart ausgebildet sein, dass nach maximal 10, bevorzugt maximal 8, weiter bevorzugt zwischen 2 bis 5, erfolgten Reversierbewegungen der Walzenwelle 12 innerhalb von maximal 5 min - in weiteren Ausführungsformen zwischen 0,5 bis 3 min - die Zerkleinerungsvorrichtung 7 und/oder der Hauptantrieb 2 abgeschaltet wird. Dies erfolgt, da bei Versuchen festgestellt worden ist, dass sich nach mehrfacher Hin- und Herbewegung der Zerkleinerungswalze 9 in einem vorgegebenen Zeitintervall ein Lösen von verkeiltem Zerkleinerungsgut trotz Hin- und Herbewegung nicht mehr ergibt und dann ein händisches Eingreifen in Ausnahmefällen erforderlich ist. Nicht dargestellt ist, dass in diesem Fall über eine mit der Steuereinrichtung 4 verbundene Signaleinrichtung ein optisches und/oder akustisches Warnsignal ausgegeben wird.

Das in Fig. 2 dargestellte Überlagerungsgetriebe 3 weist eine Gesamtübersetzung von 100 +/- 20 auf. In weiteren Ausführungsformen kann die Gesamtübersetzung zwischen 20 bis 200 liegen.

Die in Fig. 5 dargestellte Zerkleinerungswalze 9 und somit auch die Walzenwelle 12 kann während des regulären Betriebes (Regelbetrieb) der Zerkleinerungsvorrichtung 7 eine Drehzahl zwischen 8 bis 30 U/min aufweisen. In weiteren Ausführungsformen kann die Drehzahl der Walzenwelle 12 zwischen 15 bis 18 U/min betragen.

Der in Fig. 1 dargestellte Elektromotor 5 des Überlagerungszweiges 6 kann als Synchronmotor ausgebildet sein.

Des Weiteren ist bei dem in Fig. 4 gezeigten Zusammenwirken zwischen dem Überlagerungszweig 6 und dem Hohlrad 15 derart vorgesehen, dass auch eine Unterstützung des Hauptantriebes 2 durch den Elektromotor 5 möglich ist, insbesondere zum Anlaufen der Zerkleinerungsvorrichtung 7. Somit kann das Hohlrad 15 auch in eine entgegengesetzte Drehrichtung gedreht werden - im Vergleich zur Drehung für die benötigte Überlagerungsbewegung im Überlagerungsgetriebe 3 zur Unterbindung der Antriebsdrehmomentbeaufschlagung bzw. der Kompensation des Drehmomentflusses auf "Null" zwischen Sonnenrad 13 und Planetenradträger 16. Demzufolge kann der Elektromotor 5 als Zusatzantriebsaggregat in zwei unterschiedlichen Drehrichtungen beaufschlagbar sein. Insbesondere kann der Elektromotor 5 als Anlaufregelgetriebe der Zerkleinerungsvorrichtung 7 ausgebildet sein, was zum Anlaufen des Hauptantriebs 2 unter Last vorteilhaft ist. Daher kann der Elektromotor 5 unterstützend zum Hauptantrieb 2 wirken.

Ein elektrischer Hauptantrieb 2 ermöglicht die Verwendung eines kostengünstigen Asynchronmotors. Für den Anlaufbetrieb bzw. das Anfahrverhalten eines solchen Hauptantriebes 2 unter Last ist der geregelte - das heißt bei stillstehender Walzenwelle 12 - Lastaufbau aus Drehzahl Null der Walzenwelle 12 bzw. der Zerkleinerungswalze 9 durch das Überlagerungsgetriebe 3 bzw. durch den Überlagerungszweig 6 vorteilhaft.

Der in Fig. 1 dargestellte Elektromotor 5 weist eine Leistung zwischen 30 bis 200 kW auf. In weiteren Ausführungen kann die Leistung zwischen 60 bis 100 kW liegen.

Bei dem in Fig. 2 dargestellten Hauptantrieb 2 ist vorgesehen, dass dieser als Elektromotor 5 ausgebildet ist. Er kann eine Leistung zwischen 100 bis 700 kW, insbesondere zwischen 300 bis 350 kW, aufweisen. Nicht dargestellt ist, dass der Hauptantrieb 2 als ein Verbrennungsmotor ausgebildet ist.

In Fig. 5 ist eine Zerkleinerungsvorrichtung 7 dargestellt, die vorgesehen ist zur Zerkleinerung von Aufgabegut 8, vorzugsweise Hausmüll, Bioabfall, Sperrmüll, Baumischabfall, Holzmaterialien, insbesondere Altholz, Stammholz, Wurzelholz und/oder Grünschnitt, und/oder Gewerbemüll.

Die Zerkleinerungsvorrichtung 7 weist wenigstens eine Walzenwelle 12, eine an der Walzenwelle 12, vorzugsweise drehfest, angeordnete Zerkleinerungswalze 9 mit darin befestigten Zerkleinerungswerkzeugen 10 und ein Antriebssystem 1 mit den Merkmalen wenigstens eines der zuvor beschriebenen Ausführungsformen auf.

Die Zerkleinerungswerkzeuge 10 wirken mit Gegenzerkleinerungswerkzeugen 11 zur Zerkleinerung des Aufgabegutes 8 zusammen, wie dies schematisch in der Fig. 6 dargestellt ist. Der Überlastfall tritt insbesondere dann auf, wenn sich Aufgabegut 8 zwischen den Zerkleinerungswerkzeugen 10 und den Gegenzerkleinerungswerkzeugen 11 verkeilt hat oder Aufgabegut 8 sich auf oder im Bereich der Zerkleinerungswalze 9 aufwickelt, was zur Blockade der Zerkleinerungswalze 9 führen kann.

Fig. 2 zeigt, dass das Überlagerungsgetriebe 3 des Antriebssystems 1 im Antriebsstrang zwischen Hauptantrieb 2 und Walzenwelle 12 angeordnet ist.

Bevorzugt ist die Steuereinrichtung 4 derart ausgebildet, dass sich die Drehzahl der Zerkleinerungsvorrichtung 7, insbesondere die Drehzahl der Walzenwelle 12, selbst regelt, insbesondere in Abhängigkeit von der Zerkleinerungsleistung und/oder in Abhängigkeit von dem Drehmoment und/oder von der Drehzahl an der Walzenwelle 12. So kann individuell auf unterschiedliche Betriebssituationen der Zerkleinerungsvorrichtung 7 reagiert werden.

### Bezugszeichenliste:

- 1: Antriebssystem
- 2: Hauptantrieb
- 3: Überlagerungsgetriebe
- 4: Steuereinrichtung
- 5: Elektromotor
- 6: Überlagerungszweig
- 7: Zerkleinerungsvorrichtung
- 8: Aufgabegut
- 9: Zerkleinerungswalze
- 10: Zerkleinerungswerkzeug
- 11: Gegenzerkleinerungswerkzeug
- 12: Walzenwelle
- 13: Sonnenrad
- 14: Planetenrad
- 15: Hohlrad
- 16: Planetenradträger
- 17: weitere Getriebebaugruppe
- 18: zusätzliche Bremseinrichtung

## Patentansprüche

1. Verwendung eines Antriebssystems (1) für eine Zerkleinerungsvorrichtung (7) zur Zerkleinerung von Aufgabegut (8), vorzugsweise Hausmüll, Bioabfall, Sperrmüll, Baumischabfall, Holzmaterialien, insbesondere Altholz, Stammholz, Wurzelholz und/oder Grünschnitt, und/oder Gewerbemüll, insbesondere von zum Wickeln neigendem Gut, mit einem Hauptantrieb (2) zur Erzeugung einer Drehbewegung einer Walzenwelle (12) der Zerkleinerungsvorrichtung (7), einem mit dem Hauptantrieb (2) gekoppelten Überlagerungsgetriebe (3) und einer Steuereinrichtung (4) zum Detektieren eines Überlastfalls der Zerkleinerungsvorrichtung (7),
wobei zum Antrieb des Überlagerungsgetriebes (3) ein mit der Steuereinrichtung (4) gekoppelter Elektromotor (5), vorzugsweise ein Synchronmotor, für einen Überlagerungszweig (6) des Überlagerungsgetriebes (3) vorgesehen ist, und
wobei die Steuereinrichtung (4) derart ausgebildet ist, dass der Elektromotor (5) des Überlagerungszweiges (6) im Überlastfall dahingehend von der Steuereinrichtung (4) angesteuert wird, dass der Überlagerungszweig (6) des Überlagerungsgetriebes (3) eine Überlagerungsbewegung im Überlagerungsgetriebe (3) hervorruft, so dass die Antriebsdrehmomentbeaufschlagung von dem Hauptantrieb (2) zu der Walzenwelle (12) unterbunden wird.

2. Verwendung nach Anspruch 1, **dadurch gekennzeichnet, dass** die Kopplung zwischen der Steuereinrichtung (4) und dem Elektromotor (5) des Überlagerungszweiges (6) derart ausgebildet ist, dass die Steuereinrichtung (4) im Überlastfall den Elektromotor (5) des Überlagerungszweiges (6) dahingehend ansteuert, dass die Drehrichtung der Walzenwelle (12) für eine Reversierbewegung umgekehrt wird.

3. Verwendung nach Anspruch 1 oder 2, **dadurch gekennzeichnet, dass** die Steuereinrichtung (4) derart ausgebildet ist, dass der Elektromotor (5) des Überlagerungszweiges (6) weiter dahingehend von der Steuereinrichtung (4) angesteuert wird, dass die Drehzahl und/oder die Leistung des Hauptantriebes (2) während des Betriebes der Zerkleinerungsvorrichtung (7) und insbesondere im Überlastfall zumindest im Wesentlichen konstant bleibt und/oder in einem Toleranzbereich mit einer maximalen Abweichung von 30 %, vorzugsweise 20 % und insbesondere 10 % liegt, insbesondere wobei die Drehzahl des Hauptantriebes (2) zwischen 1000 bis 3000 U/min, bevorzugt zwischen 1300 bis 2000 U/min, vorzugsweise zwischen 1500 bis 1800 U/min, liegt.

4. Verwendung nach einem der vorhergehenden Ansprüche, **dadurch gekennzeichnet, dass** die Steuereinrichtung (4) zur Überwachung des Drehmomentes des Elektromotors (5) des Überlagerungszweiges (6) und/oder
zur Überwachung des Drehmomentes des Hauptantriebes (2) und/oder zur Überwachung der Drehzahl der Walzenwelle (12) ausgebildet ist.

5. Verwendung nach einem der vorhergehenden Ansprüche, **dadurch gekennzeichnet, dass** das Überlagerungsgetriebe (3) ein Planeten-Überlagerungsgetriebe (3) ist, wobei das Planeten-Überlagerungsgetriebe (3) ein Sonnenrad (13), wenigstens ein mit dem Sonnenrad (13) zusammenwirkendes Planetenrad (14) und ein mit dem wenigstens einen Planetenrad (14) zusammenwirkendes Hohlrad (15) aufweist, insbesondere wobei eine Mehrzahl von Planetenrädern (14) vorgesehen ist, die miteinander über einen Planetenradträger (16) verbunden sind und/oder insbesondere wobei die Walzenwelle (12) an dem Planetenradträger (16) und/oder an dem wenigstens einem Planetenrad (14) angeordnet ist.

6. Verwendung nach einem der vorhergehenden Ansprüche, **dadurch gekennzeichnet, dass** der Hauptantrieb (2) mit dem Sonnenrad (13) verbunden ist und/oder dass der Elektromotor (5) des Überlagerungszweiges (6) mit dem Hohlrad (15), insbesondere unmittelbar, verbunden ist.

7. Verwendung nach einem der vorhergehenden Ansprüche, **dadurch gekennzeichnet, dass** der Elektromotor (5) des Überlagerungszweig (6) als Bremse, vorzugsweise mit veränderbarer Bremswirkung, ausgebildet ist, und/oder dass der Elektromotor (5) zum Festhalten des Hohlrades (15) während des Regelbetriebes der Zerkleinerungsvorrichtung (7) ausgebildet ist.

8. Verwendung nach einem der vorhergehenden Ansprüche, **dadurch gekennzeichnet, dass** die Steuereinrichtung (4) derart ausgebildet ist, dass der Elektromotor (5) im Überlastfall dahingehend ansteuerbar ist, dass er derart mit dem Hohlrad (15) zusammenwirkt, dass eine Bewegung des Hohlrades (15), insbesondere durch eine Verringerung der Bremswirkung des Elektromotors (5) auf das Hohlrad (15), ermöglicht wird und/oder dass die Drehzahl des Hohlrades (15) erhöht wird, so dass die Umkehr der Drehrichtung der Walzenwelle (12) für die Reversierbewegung bewirkt wird.

9. Verwendung nach einem der vorhergehenden Ansprüche, **dadurch gekennzeichnet, dass** zusätzlich zum Elektromotor (5) eine mit dem Hohlrad (15) verbundene Bremseinrichtung (18) zum Festhalten des Hohlrades (15) vorgesehen ist, insbesondere wobei die zusätzliche Bremseinrichtung (18) als mechanische Bremse, vorzugsweise Reibbremse, ausgebildet ist und/oder insbesondere wobei die zusätzliche Bremseinrichtung (18) derart mit der Steuereinrichtung (4) gekoppelt ist, dass im Überlastfall die zusätzliche Bremseinrichtung (18) von dem Hohlrad (15) entkoppelt wird und/oder insbesondere wobei die zusätzliche Bremseinrichtung (18) hydraulisch und/oder elektrisch belüftbar ausgebildet ist.

10. Verwendung nach einem der vorhergehenden Ansprüche, **dadurch gekennzeichnet, dass** die Steuereinrichtung (4) derart ausgebildet ist, dass im Überlastfall der maximale Drehwinkel einer von dem Überlagerungszweig (6) durch die vorgegebene Bewegung des Hohlrades (15) bewirkten Reversierbewegung der Walzenwelle (12) zwischen 1° bis 50°, bevorzugt zwischen 2° bis 40°, weiter bevorzugt zwischen 5° bis 20°, liegt.

11. Verwendung nach einem der vorhergehenden Ansprüche, **dadurch gekennzeichnet, dass** die Steuereinrichtung (4) derart ausgebildet ist, dass nach maximal 10, bevorzugt maximal 8, weiter bevorzugt zwischen 2 bis 5, erfolgten Reversierbewegungen der Walzenwelle (12) innerhalb von maximal 5 min, bevorzugt zwischen 0,2 bis 3 min, die Zerkleinerungsvorrichtung (7) abgeschaltet wird und, vorzugsweise, über eine mit der Steuereinrichtung (4) verbundene Signaleinrichtung ein optisches und/oder akustisches Warnsignal ausgegeben wird.

12. Verwendung nach einem der vorhergehenden Ansprüche, **dadurch gekennzeichnet, dass** der Elektromotor (5) als Zusatzantriebsaggregat in zwei unterschiedlichen Drehrichtungen beaufschlagbar ist und/oder betrieben werden kann.

13. Verwendung nach einem der vorhergehenden Ansprüche, **dadurch gekennzeichnet, dass** der Elektromotor (5) eine Leistung zwischen 30 bis 200 kW, bevorzugt zwischen 50 bis 150 kW, weiter bevorzugt zwischen 60 bis 100 kW, aufweist und/oder dass der Hauptantrieb (2) als ein weiterer Elektromotor (5) und/oder als ein Verbrennungsmotor, vorzugsweise ein Dieselmotor, ausgebildet ist, insbesondere wobei der Hauptantrieb (2) eine Leistung von 100 bis 700 kW, bevorzugt von 200 bis 500 kW, weiter bevorzugt von 130 bis 500 kW und vorzugsweise von 300 bis 350 kW, aufweist.

14. Zerkleinerungsvorrichtung (7) vorgesehen zur Zerkleinerung von Aufgabegut (8), vorzugsweise Hausmüll, Bioabfall, Sperrmüll, Baumischabfall, Holzmaterialien, insbesondere Altholz, Stammholz, Wurzelholz und/oder Grünschnitt, und/oder Gewerbemüll, mit wenigstens einer Walzenwelle (12), einer an der Walzenwelle (12) angeordneten Zerkleinerungswalze (9) mit daran befestigten Zerkleinerungswerkzeugen (10) und einem Antriebssystem mit den konstruktiven Merkmalen nach einem der vorhergehenden Ansprüche.

15. Zerkleinerungsvorrichtung nach Anspruch 14, **dadurch gekennzeichnet, dass** das Überlagerungsgetriebe (3) des Antriebssystems (1) im Antriebsstrang zwischen Hauptantrieb (2) und Walzenwelle (12) angeordnet ist.
